# DEMANDE DE BREVET EUROPEEN

(11) **EP 4 080 747 A1**
(43) Date de publication de la demande: **26.10.2022**
(21) Numéro de dépôt: 22168939.1
(22) Date de dépôt: 20.04.2022
(51) Int. Cl.: H02M 1/00, H02M 3/00, H02M 3/158

(54) **DISPOSITIF ÉLECTRONIQUE ET PROCÉDÉ DE PILOTAGE D'UN CONVERTISSEUR D'ÉNERGIE ÉLECTRIQUE COMPORTANT UN ÉLÉMENT PIÉZOÉLECTRIQUE, SYSTÈME ÉLECTRONIQUE DE CONVERSION D'ÉNERGIE ÉLECTRIQUE ASSOCIÉ**

(30) Priorité: 21.04.2021 FR 2104154
(71) Demandeur: Commissariat à l'énergie atomique et aux énergies alternatives, 75015 Paris (FR)
(72) Inventeur: DESPESSE, Ghislain, 38054 GRENOBLE CEDEX 9 (FR); TOUHAMI, Mustapha, 38054 GRENOBLE CEDEX 9 (FR); MOREL, Adrien, 38054 GRENOBLE CEDEX 9 (FR); PILLONNET, Gaël, 38054 GRENOBLE CEDEX 9 (FR)
(74) Mandataire: Lavoix

(57) **Abrégé**

Ce dispositif électronique (20) de pilotage d'un convertisseur (10), comportant un élément piézoélectrique (15) et plusieurs interrupteurs (K1, K2, K3) commandés pour alterner des phases à tension, et respectivement à charge, sensiblement constante aux bornes (30, 34) dudit élément piézoélectrique, comprend :
- un module (60) de mesure d'une période d'un cycle de résonance de l'élément piézoélectrique ;
- un module (62) de détection d'un événement caractéristique appartenant à un cycle de résonance courant ;
- un module (64) de commande d'une commutation des interrupteurs ; et
- un module (66) de calcul d'au moins trois instants temporels ultérieurs de commutation lors d'au moins un cycle de résonance subséquent, postérieur au cycle courant, chaque instant temporel ultérieur étant calculé à partir d'un événement caractéristique respectif, et
le module de commande étant configuré pour commander la commutation de l'interrupteur respectif en chacun des instant temporels ultérieurs calculés.

## Description

La présente invention concerne un dispositif électronique de pilotage d'un convertisseur d'énergie électrique, le convertisseur d'énergie électrique comportant un élément piézoélectrique et plusieurs interrupteurs aptes à être commandés pour alterner des phases à tension sensiblement constante aux bornes de l'élément piézoélectrique et des phases à charge sensiblement constante aux bornes dudit élément piézoélectrique.

L'invention concerne également un système électronique de conversion d'énergie électrique comprenant un tel convertisseur d'énergie électrique et un tel dispositif électronique de pilotage, ainsi qu'un procédé de pilotage d'un tel convertisseur d'énergie électrique.

L'invention concerne le domaine des systèmes électroniques de conversion d'énergie électrique, en particulier ceux comportant un élément piézoélectrique, notamment des systèmes de conversion en une énergie électrique continue, c'est-à-dire les systèmes de conversion continu-continu, également appelés systèmes de conversion DC-DC (de l'anglais *Direct Current* - *Direct Current),* et les systèmes de conversion alternatif-continu, également appelés systèmes de conversion AC-DC (de l'anglais *Alternating Current* - *Direct Current).*

On connait des documents FR 3 064 850 B1, FR 3 086 471 A1 et FR 3 086 472 A1, ainsi que du manuscrit de thèse « *Convertisseurs DC-DC piézoélectrique avec stockage provisoire d'énergie sous forme mécanique* » de Benjamin POLLET, un convertisseur d'énergie électrique et un dispositif électronique de pilotage du type précité.

Dans le manuscrit de thèse précité, le convertisseur d'énergie électrique est typiquement un convertisseur continu-continu comportant un élément piézoélectrique, avec un premier interrupteur reliant une première électrode de l'élément piézoélectrique à une première borne d'application d'une première tension, un deuxième interrupteur reliant ladite première électrode de l'élément piézoélectrique à une première borne de fourniture d'une deuxième tension, et au moins un troisième interrupteur connectant la première électrode à une deuxième électrode de l'élément piézoélectrique, lesdits interrupteurs étant commandés de façon cyclique, à fréquence approximativement constante avec, entre chaque fermeture d'un des interrupteurs, une phase dans laquelle le piézoélectrique est placé dans un circuit électrique ouvert. La fermeture de chaque interrupteur s'effectue sous une tension approximativement nulle à ses bornes. La deuxième électrode de l'élément piézoélectrique est connectée à une deuxième borne d'application de la première tension et à une deuxième borne de fourniture de la deuxième tension.

En régime établi, un cycle de commande comporte les phases successives suivantes : (I) ouverture du circuit électrique dans lequel est placé le piézoélectrique ; (II) fermeture du premier interrupteur ; (III) ouverture du circuit électrique dans lequel est placé le piézoélectrique ; (IV) fermeture du troisième interrupteur ; (V) ouverture du circuit électrique dans lequel est placé le piézoélectrique; et (VI) fermeture du deuxième interrupteur.

Chaque ouverture du circuit électrique dans lequel est placé le piézoélectrique ou fermeture d'un interrupteur respectif est alors pilotée via la détection d'un événement déclencheur associé à la commutation concernée, puis via l'envoi du signal de commande d'ouverture ou de fermeture à l'interrupteur ou aux interrupteurs correspondants dès la détection dudit événement. L'événement déclencheur associé est par exemple un passage à zéro du courant circulant dans l'élément piézoélectrique, ou encore un passage à une valeur respective de tension sensiblement constante de la tension aux bornes de l'élément piézoélectrique (ou de la tension entre une borne et un potentiel de référence, par exemple la masse du montage).

Toutefois, un tel pilotage de ce convertisseur d'énergie électrique n'est pas optimal, notamment pour un fonctionnement du convertisseur à fréquence élevée, tel qu'à une fréquence supérieure à 1 MHz.

Le but de l'invention est alors de proposer un dispositif électronique, et un procédé associé, de pilotage d'un tel convertisseur d'énergie électrique offrant un pilotage amélioré du convertisseur, notamment à fréquence élevée, typiquement au-delà de 1 MHz.

A cet effet, l'invention a pour objet un dispositif électronique de pilotage d'un convertisseur d'énergie électrique, le convertisseur comportant un élément piézoélectrique et plusieurs interrupteurs aptes à être commandés pour alterner des phases à tension sensiblement constante aux bornes de l'élément piézoélectrique et des phases à charge sensiblement constante aux bornes dudit élément piézoélectrique, le dispositif électronique de pilotage comprenant :
- un module de mesure configuré pour mesurer une période d'un cycle de résonance de l'élément piézoélectrique ;
- un module de détection configuré pour détecter au moins un évènement caractéristique associé au convertisseur d'énergie électrique, l'au moins un événement caractéristique appartenant à un cycle de résonance courant ;
- un module de commande configuré pour commander une commutation de chacun des interrupteurs ; et
- un module de calcul configuré pour calculer au moins trois instants temporels ultérieurs de commutation lors d'au moins un cycle de résonance subséquent, chaque cycle de résonance subséquent étant postérieur au cycle de résonance courant, chaque instant temporel ultérieur de commutation étant calculé à partir d'un événement caractéristique respectif, un premier instant temporel ultérieur correspondant à l'ouverture d'un premier interrupteur, un deuxième instant temporel ultérieur correspondant à la fermeture d'un deuxième interrupteur et un troisième instant temporel ultérieur correspondant à l'ouverture du deuxième interrupteur, et
le module de commande étant configuré pour commander la commutation de l'interrupteur respectif en chacun des instant temporels ultérieurs calculés.

Avec le dispositif électronique de pilotage selon l'invention, les instants temporels ultérieurs de commutation des interrupteurs sont alors calculés en anticipation pour un ou plusieurs cycles de résonance subséquents, postérieurs au cycle de résonance courant. Cela permet alors d'avoir un fonctionnement correct du convertisseur avec des commutations des interrupteurs aux instants temporels adéquats même pour une fréquence élevée du fonctionnement du convertisseur, telle qu'une fréquence supérieure à 1 MHz, où la fréquence de fonctionnement du convertisseur est égale à l'inverse de la période du cycle de résonance, également appelée période de résonance, c'est-à-dire égale à l'inverse de la durée dudit cycle.

Avec le dispositif de pilotage de l'état de la technique, des décalages de commutation sont susceptibles d'apparaître progressivement pour un fonctionnement à fréquence élevée. En effet, une comparaison de tension ou de courant prend plusieurs nanosecondes, notées ns, la génération d'un signal de commande à destination du ou des interrupteurs correspondants, tels que des transistors de puissance, requiert également quelques ns à plusieurs dizaines de ns, et le temps d'ouverture ou de fermeture de l'interrupteur en lui-même, tel que le transistor, demande aussi quelques ns. Ainsi, en cumulant ces différentes durées, le pilotage selon l'état de la technique du convertisseur d'énergie électrique dure en soi une à plusieurs dizaines de ns à chaque phase du cycle de commande. Or, pour une fréquence de fonctionnement égal à 10 MHz, la période de résonance dure 100 ns, et chaque phase du cycle de commande dure moins de 50ns. Un retard de pilotage d'une à plusieurs dizaines ns à chaque phase du cycle de commande engendre alors des décalages temporels préjudiciables au regard de la période de résonance.

Suivant d'autres aspects avantageux de l'invention, le dispositif électronique de pilotage comprend une ou plusieurs des caractéristiques suivantes, prises isolément ou suivant toutes les combinaisons techniquement possibles :
- le nombre total de phases à tension sensiblement constante aux bornes de l'élément piézoélectrique et à charge sensiblement constante aux bornes dudit élément piézoélectrique au cours d'un cycle de résonance respectif est supérieur ou égal à 6 ;
- chaque évènement caractéristique est choisi parmi le groupe consistant en : un passage à zéro du courant circulant dans l'élément piézoélectrique, un passage à une valeur prédéfinie de la tension aux bornes de l'élément piézoélectrique, un passage à une valeur prédéfinie de la tension entre une borne de l'élément piézoélectrique et un potentiel de référence, un passage à une valeur respective de tension sensiblement constante de la tension aux bornes de l'élément piézoélectrique, un passage à une valeur respective de tension sensiblement constante de la tension entre la borne de l'élément piézoélectrique et le potentiel de référence, et un passage à une valeur de déformation de référence, telle qu'une valeur de déformation mesurée via une électrode séparée disposée contre l'élément piézoélectrique ;
- l'événement caractéristique associé aux premier, deuxième et troisième instants temporels ultérieurs est le passage à zéro du courant circulant dans l'élément piézoélectrique ;
l'événement caractéristique étant de préférence le passage à zéro et en décroissant dudit courant ;
- chaque instant temporel ultérieur calculé dépend d'un écart temporel égal à K fois la période du cycle de résonance de l'élément piézoélectrique, K étant un nombre entier de valeur supérieure ou égale à 1 ;
- la valeur du nombre K est déterminée en fonction de la durée de la période du cycle de résonance, et plus la durée de ladite période est courte, plus la valeur du nombre K est élevée ;
la valeur du nombre K étant de préférence supérieure à 2 ;
- chacun des premier, deuxième et troisième instants temporels ultérieurs est égal, à partir l'événement caractéristique, à la somme de l'écart temporel et d'une durée de référence respective ;
chaque durée de référence respective étant de préférence déterminée à partir de l'instant temporel de commutation correspondant lors du cycle de résonance courant ou à partir de la période du cycle de résonance ;
- le module de commande est, pour la commande de commutation d'un interrupteur respectif, configuré pour envoyer un signal de commande audit interrupteur en un instant temporel d'émission respectif, chaque instant temporel d'émission étant égal à l'instant temporel ultérieur de commutation respectif moins une durée de commutation propre audit interrupteur, la durée de commutation étant une durée nécessaire à l'interrupteur pour effectuer ladite commutation à partir du moment où il a reçu le signal de commande correspondant,
la durée de commutation incluant de préférence un délai de propagation du signal de commande correspondant au travers d'un bus de communication et/ou d'une interface d'isolation galvanique et/ou d'un driver de transistor et/ou de portes logiques et/ou de dispositifs de protection ;
une durée de commutation en ouverture et une durée de commutation en fermeture étant de préférence prédéfinies pour chaque interrupteur ;
- le module de calcul est configuré pour calculer les instants temporels ultérieurs lors de plusieurs cycles de résonance subséquents successifs, les au moins trois instants temporels ultérieurs étant calculés pour chacun desdits cycles subséquents successifs ;
- le module de calcul est configuré pour calculer en outre un quatrième instant temporel ultérieur correspondant à la fermeture du premier interrupteur ;
- l'événement caractéristique associé au quatrième instant temporel ultérieur est le passage à une valeur respective de tension sensiblement constante de la tension aux bornes de l'élément piézoélectrique ou bien le passage à zéro du courant circulant dans l'élément piézoélectrique ;
- le convertisseur comporte trois interrupteurs aptes à être commandés pour alterner des phases à tension sensiblement constante aux bornes de l'élément piézoélectrique et des phases à charge sensiblement constante aux bornes dudit élément piézoélectrique, et
le module de calcul est configuré pour calculer en outre un cinquième instant temporel ultérieur correspondant à la fermeture d'un troisième interrupteur ;
- l'événement caractéristique associé au cinquième instant temporel ultérieur est le passage à une valeur respective de tension sensiblement constante de la tension aux bornes de l'élément piézoélectrique ou bien le passage à zéro du courant circulant dans l'élément piézoélectrique ;
- le module de calcul est configuré pour calculer en outre un sixième instant temporel ultérieur correspondant à l'ouverture du troisième interrupteur ;
- l'événement caractéristique associé au sixième instant temporel ultérieur est le passage à zéro du courant circulant dans l'élément piézoélectrique ou bien le passage à une valeur prédéfinie de la tension aux bornes de l'élément piézoélectrique ;
- le module de mesure est configuré pour mesurer la période du cycle de résonance en détectant deux évènements caractéristiques successifs de même type, la période du cycle de résonance correspond à la durée écoulée entre les deux évènements caractéristiques successifs ;
ledit type de l'événement caractéristique étant de préférence un passage à zéro suivant une monotonie prédéfinie d'un courant circulant dans l'élément piézoélectrique ;
- l'événement caractéristique est détecté par comparaison, avec une valeur prédéfinie correspondante et via un comparateur respectif, d'une grandeur choisie parmi la déformation de l'élément piézoélectrique (typiquement via une électrode séparée sur l'élément piézoélectrique), le courant circulant dans l'élément piézoélectrique, la tension aux bornes de l'élément piézoélectrique, et la tension entre une borne de l'élément piézoélectrique et un potentiel de référence, tel qu'un potentiel d'une masse électrique du convertisseur d'énergie électrique, et
l'instant temporel ultérieur correspondant dépend en outre d'une durée de comparaison propre audit comparateur, la durée de comparaison étant une durée nécessaire au comparateur pour effectuer ladite comparaison et générer un signal de détection de l'événement caractéristique ;
la durée de comparaison étant de préférence retranchée à l'écart temporel ;
- chaque durée de comparaison est prédéfinie ;
- chaque durée de comparaison est en outre modifiable via une boucle de régulation en fonction d'un écart entre la grandeur observée, telle que la tension aux bornes de l'élément piézoélectrique, et la valeur prédéfinie correspondante lors d'une détection d'évènement(s) au cours d'un cycle de résonance précédent ;
- le convertisseur d'énergie électrique est un convertisseur continu-continu abaisseur, le premier interrupteur relie une première électrode de l'élément piézoélectrique à une première borne de fourniture d'une tension de sortie du convertisseur, et le deuxième interrupteur relie la première électrode de l'élément piézoélectrique à une première borne d'application d'une tension d'entrée du convertisseur ;
- le convertisseur d'énergie électrique est un convertisseur continu-continu abaisseur, et le troisième interrupteur relie la première électrode de l'élément piézoélectrique à une deuxième électrode de l'élément piézoélectrique ;
- le convertisseur d'énergie électrique est un convertisseur continu-continu élévateur, le premier interrupteur relie une première électrode de l'élément piézoélectrique à une première borne d'application d'une tension d'entrée du convertisseur, et le deuxième interrupteur relie la première électrode de l'élément piézoélectrique à une deuxième électrode de l'élément piézoélectrique ;
- le convertisseur d'énergie électrique est un convertisseur continu-continu élévateur, et la première électrode de l'élément piézoélectrique est reliée à une première borne de fourniture d'une tension de sortie du convertisseur par le troisième interrupteur, qui peut être une diode.

L'invention a aussi pour objet un système électronique de conversion d'énergie électrique comprenant :
- un convertisseur d'énergie électrique comportant un élément piézoélectrique et plusieurs interrupteurs aptes à être commandés pour alterner des phases à tension sensiblement constante aux bornes de l'élément piézoélectrique et des phases à charge sensiblement constante aux bornes dudit élément piézoélectrique ; et
- un dispositif électronique de pilotage du convertisseur d'énergie électrique, le dispositif de pilotage étant tel que défini ci-dessus.

Suivant un autre aspect avantageux de l'invention, le système électronique de conversion d'énergie électrique est un système de conversion en une énergie électrique continue, tel qu'un système de conversion continu-continu ou un système de conversion alternatif-continu.

L'invention a également pour objet un procédé de pilotage d'un convertisseur d'énergie électrique, le convertisseur comportant un élément piézoélectrique et plusieurs interrupteurs aptes à être commandés pour alterner des phases à tension sensiblement constante aux bornes de l'élément piézoélectrique et des phases à charge sensiblement constante aux bornes dudit élément piézoélectrique,
le procédé étant mis en œuvre par un dispositif électronique de pilotage et comprenant les étapes suivantes :
   - mesure d'une période d'un cycle de résonance de l'élément piézoélectrique ;
   - détection d'un événement caractéristique associé au convertisseur d'énergie électrique, l'événement caractéristique appartenant à un cycle de résonance courant ;
   - calcul d'au moins trois instants temporels ultérieurs de commutation lors d'au moins un cycle de résonance subséquent, chaque cycle de résonance subséquent étant postérieur au cycle de résonance courant, chaque instant temporel ultérieur de commutation étant calculé à partir d'un événement caractéristique respectif, un premier instant temporel ultérieur correspondant à l'ouverture d'un premier interrupteur, un deuxième instant temporel ultérieur correspondant à la fermeture d'un deuxième interrupteur et un troisième instant temporel ultérieur correspondant à l'ouverture du deuxième interrupteur ; et
   - commande d'une commutation de chacun des interrupteurs ;
l'étape de commande comportant une commande de la commutation de l'interrupteur respectif en chacun des instant temporels ultérieurs calculés.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
- la figure 1 est une représentation schématique d'un système électronique de conversion d'énergie électrique selon l'invention, comprenant un convertisseur d'énergie électrique comportant un élément piézoélectrique et plusieurs interrupteurs aptes à être commandés pour alterner des phases à tension sensiblement constante aux bornes de l'élément piézoélectrique et des phases à charge sensiblement constante aux bornes dudit élément piézoélectrique, et un dispositif électronique de pilotage du convertisseur d'énergie électrique ;
- la figure 2 est un ensemble de courbes représentant un courant circulant dans l'élément piézoélectrique, une déformation mécanique de l'élément piézoélectrique, et la tension aux bornes de l'élément piézoélectrique pour différentes configurations de conversions d'énergie électrique, à savoir une configuration abaisseur de tension, une configuration élévateur de tension, une configuration fortement abaisseur de tension et une variante de configuration abaisseur de tension ;
- la figure 3 est une représentation schématique du convertisseur d'énergie électrique de la figure 1 pour la configuration élévateur de tension, avec un chronogramme illustrant l'évolution de la tension aux bornes de l'élément piézoélectrique durant un cycle de résonance dudit élément ;
- la figure 4 est une vue analogue à celle de la figure 3, pour la configuration fortement abaisseur de tension du convertisseur d'énergie électrique ;
- la figure 5 est une vue analogue à celle des figures 3 et 4, pour la variante de configuration abaisseur de tension du convertisseur d'énergie électrique ;
- la figure 6 illustre le calcul d'un premier instant temporel ultérieur de commutation correspondant à l'ouverture d'un premier interrupteur, avec deux chronogrammes représentant l'évolution de la tension aux bornes de l'élément piézoélectrique et lors de de plusieurs cycles de résonance successifs pour la configuration fortement abaisseur de tension ou la variante de configuration abaisseur de tension, et pour la configuration élévateur de tension ;
- la figure 7 est une vue analogue à celle de la figure 6, illustrant le calcul d'un deuxième instant temporel ultérieur de commutation correspondant à la fermeture d'un deuxième interrupteur du convertisseur d'énergie électrique ;
- la figure 8 est une vue analogue à celle des figures 6 et 7, illustrant le calcul d'un troisième instant temporel ultérieur de commutation correspondant à l'ouverture du deuxième interrupteur du convertisseur d'énergie électrique ;
- la figure 9 est une vue analogue à celle des figures 6 à 8, illustrant le calcul d'un quatrième instant temporel ultérieur de commutation correspondant à la fermeture du premier interrupteur du convertisseur d'énergie électrique ;
- la figure 10 est une vue analogue à celle de la figure 9, selon une variante de réalisation pour le calcul du quatrième instant temporel ultérieur de commutation ;
- la figure 11 est une vue analogue à celle des figures 6 à 10, illustrant le calcul d'un cinquième instant temporel ultérieur de commutation correspondant à la fermeture d'un troisième interrupteur du convertisseur d'énergie électrique ;
- la figure 12 est une vue analogue à celle de la figure 11, selon une variante de réalisation pour le calcul du cinquième instant temporel ultérieur de commutation ;
- la figure 13 est une vue analogue à celle des figures 6 à 12, illustrant le calcul d'un sixième instant temporel ultérieur de commutation correspondant à l'ouverture du troisième interrupteur du convertisseur d'énergie électrique ;
- la figure 14 est une vue analogue à celle de la figure 13, selon une variante de réalisation pour le calcul du sixième instant temporel ultérieur de commutation ; et
- la figure 15 est un organigramme d'un procédé, selon l'invention, de pilotage du convertisseur d'énergie électrique de la figure 1, le procédé étant mis en œuvre par le dispositif électronique de pilotage de la figure 1.

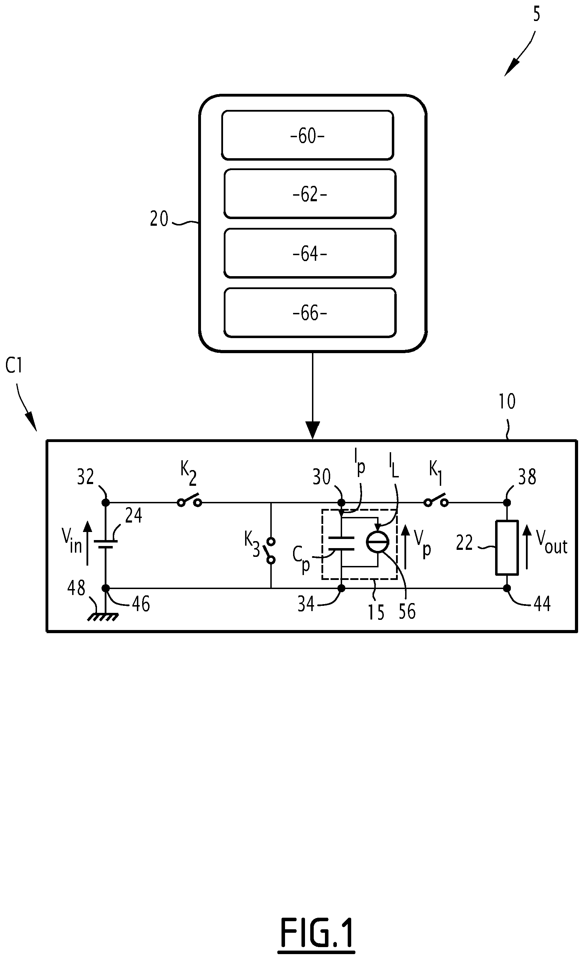

Sur la figure 1, un système électronique de conversion d'énergie électrique 5 comprend un convertisseur d'énergie électrique 10 comportant un élément piézoélectrique 15 et plusieurs interrupteurs K₁ , K₂, K₃ aptes à être commandés pour alterner des phases à tension sensiblement constante aux bornes de l'élément piézoélectrique 15 et des phases à charge sensiblement constante aux bornes dudit élément piézoélectrique 15 ; et un dispositif électronique 20 de pilotage du convertisseur d'énergie électrique 10.

Le système électronique de conversion d'énergie électrique 5 est typiquement un système de conversion en une énergie électrique continue, tel qu'un système de conversion continu-continu apte à convertir une première énergie électrique continue reçue en entrée en une deuxième énergie électrique continue délivrée en sortie, ou encore un système de conversion alternatif-continu apte à convertir une énergie électrique alternative reçue en entrée en une énergie électrique continue délivrée en sortie du système de conversion 5.

Lorsque le système de conversion d'énergie électrique 5 est un système de conversion alternatif-continu, le système de conversion d'énergie électrique 5 comprend de préférence en outre un redresseur de tension, non représenté, connecté en entrée du convertisseur d'énergie électrique 10 et apte à redresser la tension électrique alternative reçue en entrée du système de conversion 5 pour délivrer une tension électrique redressée en entrée du convertisseur 10, le convertisseur d'énergie électrique 10 étant de préférence un convertisseur continu-continu apte à convertir une énergie électrique continue en une autre énergie électrique continue. Le redresseur de tension est par exemple un pont redresseur, tel qu'un pont de diodes. En variante, le redresseur de tension est formé en partie par des interrupteurs du convertisseur 10.

L'homme du métier observera que ces différents exemples pour le système conversion 5, qu'il s'agisse d'un système de conversion continu-continu ou bien d'un système de conversion alternatif-continu, sont également présentés dans les documents FR 3 086 471 A1 et FR 3 086 472 A1, notamment en regard de leurs figures 1 à 3,10,15,17 et 19 à 20.

Le convertisseur d'énergie électrique 10 est de préférence un convertisseur continu-continu, et est également appelé convertisseur DC-DC. Le convertisseur continu-continu a généralement pour rôle de réguler une tension d'alimentation Vₒᵤₜ d'une charge 22 à une valeur stable, en étant alimenté par une source d'énergie 24 fournissant une tension sensiblement continue Vᵢₙ. La source d'énergie 24 est par exemple une batterie ou un panneau solaire.

Le convertisseur d'énergie électrique 10 est alors configuré pour élever la valeur de la tension continue entre son entrée et sa sortie, et est alors également appelé convertisseur continu-continu élévateur, ou encore convertisseur continu-continu fortement élévateur ; ou bien est configuré pour abaisser la valeur de la tension continue entre son entrée et sa sortie, et est alors appelé convertisseur continu-continu abaisseur, avec également une variante de convertisseur continu-continu fortement abaisseur.

Lorsque le convertisseur d'énergie électrique 10 est un convertisseur continu-continu abaisseur, la valeur de la tension d'entrée correspond typiquement à la tension Vᵢₙ de la source d'énergie 24, et la valeur de la tension de sortie correspond à la tension Vₒᵤₜ aux bornes de la charge 22, la tension Vᵢₙ étant alors supérieure à la tension Vₒᵤₜ.

Lorsque le convertisseur d'énergie électrique 10 est un convertisseur continu-continu élévateur, la valeur de la tension d'entrée correspond aussi typiquement à la tension Vᵢₙ de la source d'énergie 24, et la valeur de la tension de sortie correspond à la tension Vₒᵤₜ aux bornes de la charge 22, la tension Vᵢₙ étant alors inférieure à la tension Vₒᵤₜ.

Lorsque le convertisseur d'énergie électrique 10 est un convertisseur continu-continu fortement abaisseur, la valeur de la tension d'entrée correspond par exemple à la différence de tension (Vᵢₙ-Vₒᵤₜ), et la valeur de la tension de sortie correspond par exemple à la tension Vₒᵤₜ, la différence de tension (Vᵢₙ-Vₒᵤₜ) étant nettement supérieure à la tension Vₒᵤₜ.

Lorsque le convertisseur d'énergie électrique 10 est un convertisseur continu-continu abaisseur, selon une variante d'abaisseur, la valeur de la tension d'entrée correspond par exemple à la différence de tension (Vᵢₙ-Vₒᵤₜ), et la valeur de la tension de sortie correspond à la tension Vₒᵤₜ aux bornes de la charge 22, la différence de tension (Vᵢₙ-Vₒᵤₜ) étant supérieure à la tension Vₒᵤₜ.

Le convertisseur d'énergie électrique 10 comporte l'élément piézoélectrique 15, et le dispositif de pilotage 20 est configuré pour faire fonctionner le matériau piézoélectrique de l'élément piézoélectrique 15 à sa résonance afin d'exploiter des phases de transfert de charge permettant de s'affranchir de l'utilisation d'un élément inductif, tout en régulant la tension de sortie en conservant la résonance du matériau piézoélectrique, c'est-à-dire avec des cycles de commutation répétés à une fréquence de fonctionnement dépendant de la fréquence de résonance de l'élément piézoélectrique 15, et en ajustant les durées de phases de commutation respectives à l'intérieur du cycle de résonance.

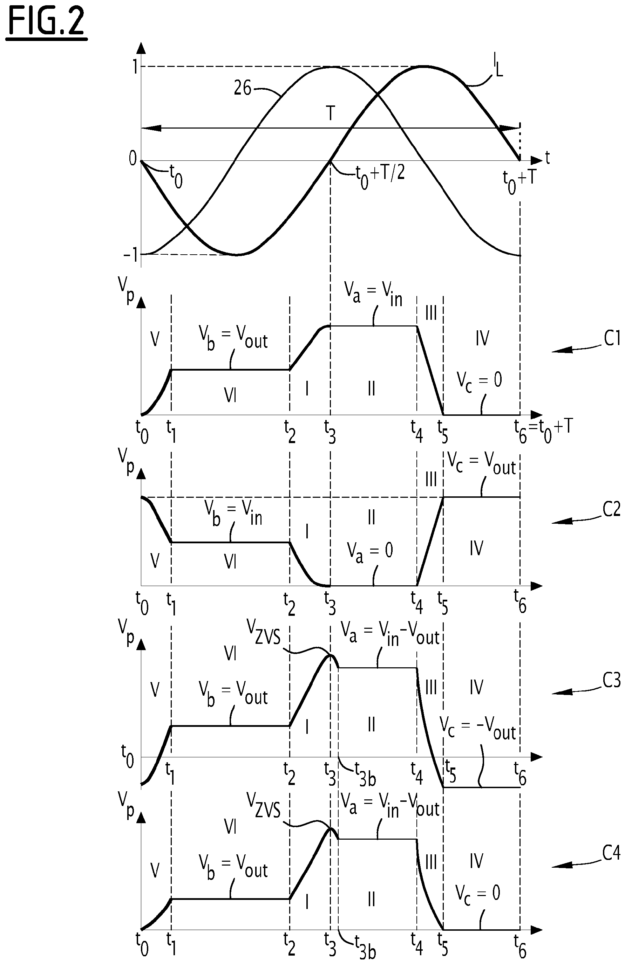

Comme connu en soi, l'oscillation mécanique de l'élément piézoélectrique 15 est approximativement sinusoïdale, ainsi que représenté par la courbe 26 à la figure 2 illustrant la déformation mécanique de l'élément piézoélectrique 15 au cours d'un cycle de résonance respectif. Une augmentation ou une diminution de l'énergie stockée sur une période conduit respectivement à une augmentation ou à une diminution de l'amplitude d'oscillation. Par ailleurs, lors d'une phase à charge sensiblement constante aux bornes de l'élément piézoélectrique 15, c'est-à-dire lorsque l'élément piézoélectrique 15 est placé dans un circuit électrique sensiblement ouvert, avec un faible échange de charges électriques entre l'élément piézoélectrique 15 et l'extérieur, une augmentation de l'amplitude des oscillations engendre une augmentation de l'amplitude de la tension Vₚ aux bornes de l'élément piézoélectrique 15, et lors d'une phase à tension sensiblement constante aux bornes de l'élément piézoélectrique 15, cette augmentation d'amplitude d'oscillation conduit à une augmentation d'un courant I_{L} circulant dans l'élément piézoélectrique 15.

Par charge sensiblement constante, on entend un échange d'une charge avec l'extérieur qui est inférieur à 10% de la charge qui aurait été échangée avec l'extérieur si la tension avait été maintenue constante. Autrement dit, par charge sensiblement constante, on entend une variation de charge inférieure à 10% de la charge qui aurait été échangée avec l'extérieur de l'élément piézoélectrique 15 si la tension aux bornes de l'élément piézoélectrique 15 avait été maintenue constante sur la durée temporelle considérée.

Par circuit électrique sensiblement ouvert, on entend un circuit dont un éventuel courant de fuite conduit à une variation de charge de l'élément piézoélectrique 15 inférieure à 10% de la charge qui aurait été échangée avec l'extérieur de l'élément piézoélectrique 15 si la tension aux bornes de l'élément piézoélectrique 15 avait été maintenue constante sur la durée temporelle considérée.

Par tension sensiblement constante, on entend une variation de tension inférieure à 20%, de préférence inférieure à 10%, de la tension d'entrée ou de sortie du convertisseur 10. À titre d'exemple, si la tension d'entrée du convertisseur 10 est égale à 100V, alors la variation de tension lors de chaque phase à tension sensiblement constante, c'est-à-dire sur chaque palier à tension sensiblement constante, est inférieure à 20% de cette tension, c'est-à-dire inférieure à 20V ; de préférence inférieure à 10 % de cette tension, c'est-à-dire inférieure à 10V.

Le convertisseur 10 comporte alors plusieurs interrupteurs K₁, K₂, K₃ aptes à être commandés pour alterner des phases à tension sensiblement constante et des phases à charge sensiblement constante aux bornes de l'élément piézoélectrique 15, à l'intérieur de périodes de durée sensiblement constante correspondant à la fréquence de fonctionnement du convertisseur 10, dépendant de la fréquence de résonance, également appelée fréquence propre, de l'élément piézoélectrique 15. Les phases à charge sensiblement constante permettent, en régime établi ou permanent, de passer d'une tension constante à une autre et de fermer les interrupteurs qui doivent l'être lorsque la tension à leurs bornes est de préférence nulle afin d'avoir une commutation dite à zéro de tension, également appelée commutation ZVS (de l'anglais *Zero Voltage Switching).*

La fréquence de résonance est la fréquence à laquelle oscille l'élément piézoélectrique 15 et par conséquent son courant de sortie Iₚ, visible sur les figures 1 et 3 à 5. Le cycle de conversion est synchronisé sur un mouvement mécanique de l'élément piézoélectrique 15, et la fréquence du pilotage est alors calée sur la fréquence d'oscillation mécanique. En pratique, cette fréquence d'oscillation dépend du point de fonctionnement du convertisseur 10 : valeurs des trois paliers de tension et du courant de sortie. En fonction du point de fonctionnement, cette fréquence d'oscillation évolue typiquement entre la fréquence de résonance dite série du piézoélectrique (ωₛ=1/√(LC) où L et C correspondent aux inductance et capacité d'une branche résonante 56 décrite ci-après) et la fréquence de résonance dite parallèle du piézoélectrique (ωₚ=1/√(L*C*Cₚ/(C+Cₚ))), également respectivement appelés fréquence de résonance et fréquence d'antirésonance de l'élément piézoélectrique 15. La fréquence de fonctionnement du convertisseur 10 est alors comprise entre ces deux fréquences de résonance et d'antirésonance de l'élément piézoélectrique 15. Le point de fonctionnement varie lentement au regard de la fréquence d'oscillation de l'élément piézoélectrique 15. Le point de fonctionnement évolue typiquement à moins de 10kHz, alors que la fréquence d'oscillation de l'élément piézoélectrique 15 est typiquement supérieure ou égale à 100kHz. De ce fait, la fréquence de fonctionnement du convertisseur 10évolue peu d'une période à la suivante.

Le nombre total de phases à tension sensiblement constante et de phases à charge sensiblement constante aux bornes de l'élément piézoélectrique 15 au cours d'un cycle de résonance est supérieur ou égal à six. Dans l'exemple de la figure 2, ce nombre total de phases est égal à six.

Ces phases successives d'un cycle de résonance vont alors être décrites dans l'exemple de la figure 2 à six phases, selon un format générique correspondant aux différentes configurations du convertisseur 10. Sont représentés dans ce format générique quatre exemples non limitatifs de convertisseurs : abaisseur, élévateur, fortement abaisseur, ou encore variante d'abaisseur.

Dans l'exemple de la figure 2, ces différentes phases correspondent à un fonctionnement en régime établi ou permanent du convertisseur 10, c'est-à-dire à partir du moment où la résonance du matériel piézoélectrique est atteinte avec une amplitude sensiblement constante, et alors avec des échanges d'énergie et de charge sensiblement équilibrés sur chaque période T du cycle de résonance. Pour simplifier la description, les pertes dans les interrupteurs à l'état passant, ainsi que les pertes dans le matériau piézoélectrique à la résonance sont négligées.

La figure 2 représente alors l'évolution du courant I_{L} circulant dans l'élément piézoélectrique 15 ; de la tension Vₚ aux bornes de l'élément piézoélectrique 15, également représentée sur la figure 1 et 3 à 5 ; et de la déformation mécanique de l'élément piézoélectrique 15, représentée par la courbe 26 ; ceci au cours d'un cycle de résonance et pour quatre configurations de conversion distinctes du convertisseur 10, à savoir une première configuration C1 en abaisseur de tension, une deuxième configuration C2 en élévateur de tension, une troisième configuration C3 en fortement abaisseur de tension, et une quatrième configuration C4 en variante d'abaisseur de tension.

Par convention, un premier instant temporel de commutation, noté t2, correspond à l'ouverture d'un premier interrupteur K₁, et la tension Vₚ aux bornes de l'élément piézoélectrique 15 passe alors d'une tension précédente V_{b} à une position de circuit ouvert. En ce premier instant temporel de commutation t₂ commence alors une première phase I durant jusqu'à un instant temporel t₃ correspondant à un passage à zéro du courant I_{L} circulant dans l'élément piézoélectrique 15. Préalablement, l'instant temporel t₂ a été défini de sorte qu'en l'instant temporel t₃, la tension Vₚ aux bornes de l'élément piézoélectrique 15 atteigne une valeur Vₐ ou bien une valeur Vzvs correspondant à la valeur permettant une commutation à zéro de tension de l'interrupteur correspondant.

A l'instant temporel t₃, commence une deuxième phase II. En cet instant temporel t₃, si la valeur Vzvs est égale à la valeur Vₐ, alors l'élément piézoélectrique 15 peut passer de la phase à charge sensiblement constante (ou en circuit sensiblement ouvert) à une phase suivante à tension sensiblement constante à la valeur Vₐ, et l'instant temporel t₃ forme alors à un deuxième instant temporel de commutation correspondant à la fermeture d'un deuxième interrupteur K₂. Dans l'exemple de la figure 2, le deuxième instant temporel de commutation est l'instant t₃ dans le cas des première et deuxième configurations C1, C2.

Si en l'instant temporel t₃, la valeur V_{zvs} est différente de la valeur Vₐ, alors l'élément piézoélectrique 15 est maintenu en circuit ouvert jusqu'à ce que le deuxième interrupteur K₂ passe par une tension nulle à ses bornes, et le deuxième instant temporel de commutation correspondant à la fermeture du deuxième interrupteur K₂ et au début de la phase à tension sensiblement constante à la valeur Vₐ est alors noté t_{3b}, comme représenté sur la figure 2 dans le cas des troisième et quatrième configurations C3, C4.

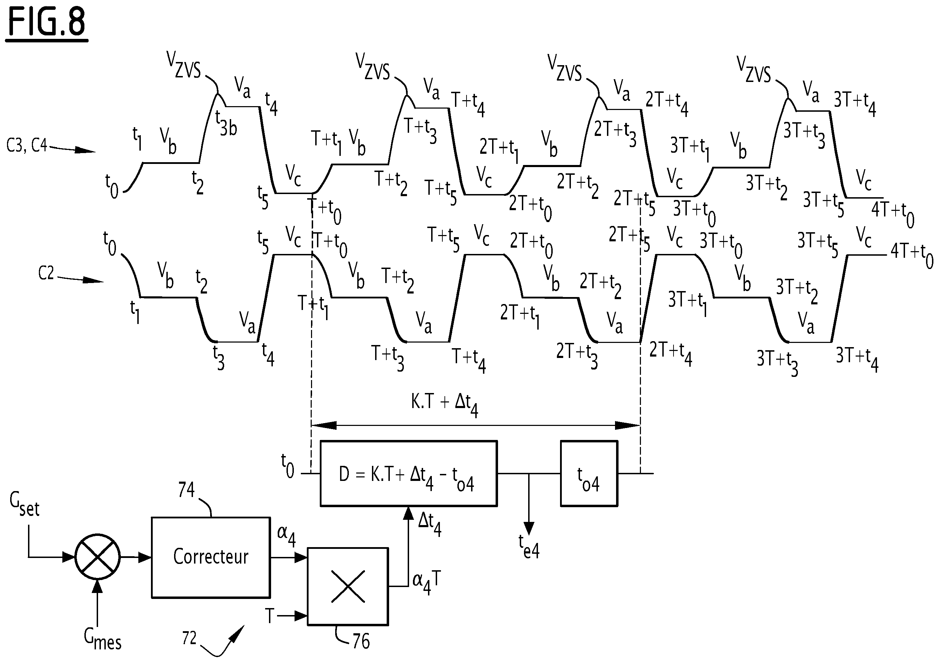

Cette deuxième phase II est alors une phase à tension sensiblement constante à la valeur Vₐ, et dure jusqu'à un instant temporel t₄ qui forme un paramètre de réglage du convertisseur 10, cet instant temporel t₄ permettant de définir la tension, le courant ou encore la puissance souhaitée en sortie du convertisseur 10, comme expliqué par la suite en regard de la figure 8.

L'instant temporel t₄ correspond alors à la fin de la deuxième phase II et à l'instant auquel le deuxième interrupteur K₂ doit alors être ouvert, l'instant temporel t₄ formant un troisième instant temporel de commutation correspondant à l'ouverture du deuxième interrupteur K₂.

Au troisième instant temporel de commutation correspondant à l'ouverture du deuxième interrupteur K₂ débute une troisième phase III correspondant à une phase à charge sensiblement constante, ou encore en circuit sensiblement ouvert, cette troisième phase III durant jusqu'à un instant temporel t₅ défini par le passage à une nouvelle valeur V_{c} prédéfinie de la tension Vₚ aux bornes de l'élément piézoélectrique 15. Lorsque le convertisseur 10 comporte trois interrupteurs K₁, K₂, K₃ aptes à être commandés pour alterner des phases à tension sensiblement constante et des phases à charge sensiblement constante aux bornes de l'élément piézoélectrique 15, l'instant temporel t₅ formant la fin de la troisième phase III correspond typiquement à la fermeture d'un troisième interrupteur K₃, l'instant temporel t₅ formant alors un cinquième instant temporel de commutation.

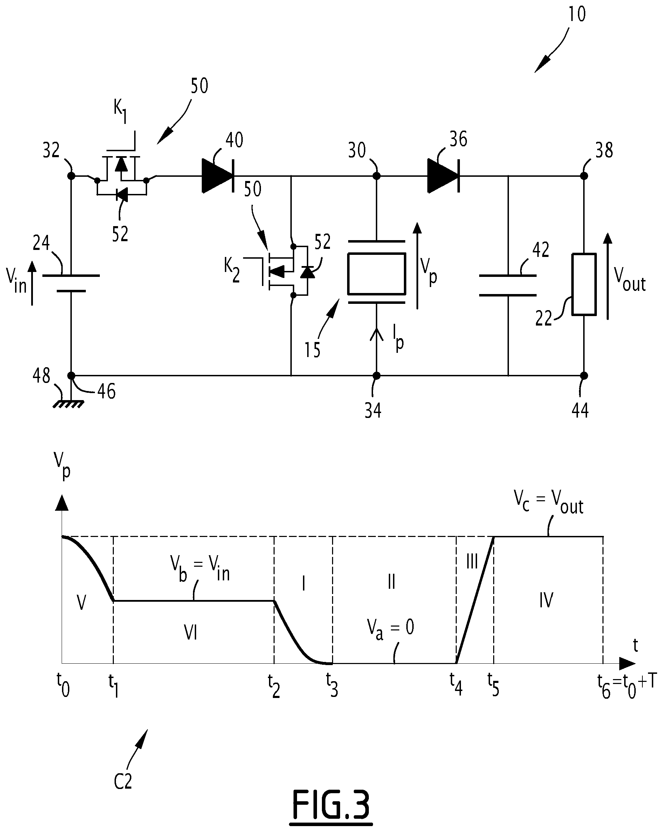

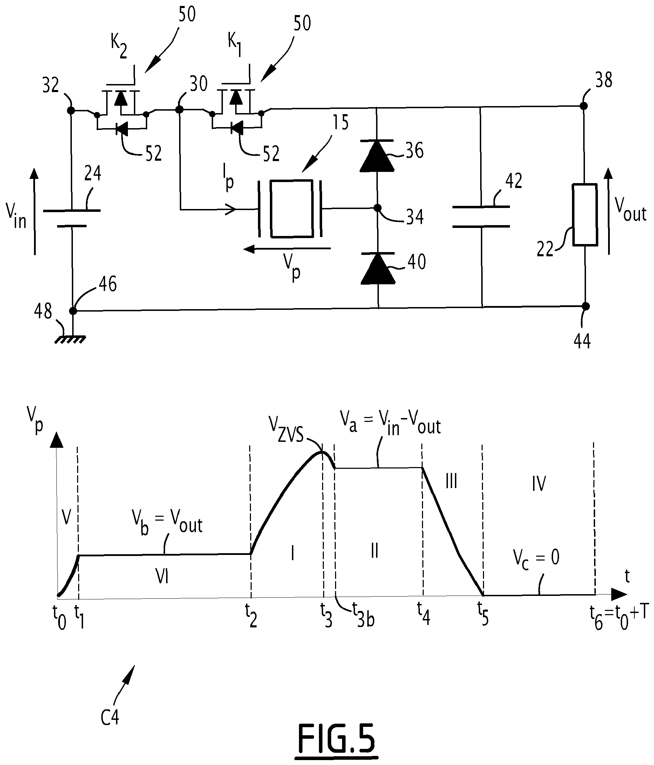

En variante, la fin de la troisième phase III pour passer à une quatrième phase IV à tension sensiblement constante à la valeur égale à V_{c} est obtenue via la commutation d'une diode correspondante, telle qu'une première diode 36 décrite ci-après dans les exemples des figures 3 et 5.

A l'instant temporel t₅ débute alors une quatrième phase IV correspondant à une phase à tension sensiblement constante à la valeur V_{c}, cette quatrième phase IV durant jusqu'à un instant temporel t₀, ou encore jusqu'à un instant temporel t₆ modulo la période T du cycle de résonance défini par le passage à zéro du courant I_{L} circulant dans l'élément piézoélectrique 15, et selon une monotonie opposée à celle du passage à zéro en l'instant temporel t₃. Par convention, l'instant temporel t₆ est égal à la somme de l'instant temporel t₀ et de la période T du cycle de résonance, et est également noté (to+T).

Dans l'exemple de la figure 2, l'instant temporel t₆ correspond à la fin d'un cycle de résonance de l'élément piézoélectrique 15, le cycle représenté ayant été défini par rapport aux instants temporels de passage à zéro du courant I_{L} circulant dans l'élément piézoélectrique 15, et non par rapport au premier instant temporel de commutation correspondant à l'ouverture du premier interrupteur K₁.

L'instant temporel t₀, ou encore l'instant temporel t₆, est obtenu via l'ouverture du troisième interrupteur K₃ lorsque celui-ci est présent, et forme alors un sixième instant temporel de commutation. En variante, l'instant temporel t₀, ou encore l'instant temporel t₆, correspond alors à l'ouverture de la première diode 36.

A partir du passage par zéro du courant I_{L} circulant dans l'élément piézoélectrique 15 débute alors une cinquième phase V correspondant à une phase à charge sensiblement constante, cette cinquième V phase s'écoulant entre l'instant temporel t₆ et l'instant temporel t₆+t₁, ou encore entre l'instant temporel t₀ et l'instant temporel t₁ dans l'exemple de la figure 2, étant entendu que l'instant temporel t₆ correspond à l'instant temporel t₀ à un cycle de résonance près. La fin de cette cinquième phase V correspond au moment où la tension Vₚ aux bornes de l'élément piézoélectrique 15 atteint une valeur V_{b} prédéfinie.

En l'instant temporel t₆+t₁, ou dans l'exemple de la figure 2 en l'instant temporel t₁, débute alors une sixième phase VI correspondant à une phase à tension sensiblement constante à la valeur V_{b}, le début de cette sixième phase VI étant alors obtenu par la fermeture du premier interrupteur K₁. L'instant temporel t₁, ou encore l'instant temporel t₆+t₁ selon le cycle de résonance courant considéré, forme alors un quatrième instant temporel de commutation.

L'homme du métier observera alors que dans cet exemple du cycle de résonance à six phases du convertisseur 10 présenté de façon générique pour différentes configurations C1 à C4 en regard de la figure 2, les trois phases à tension sensiblement constante correspondent aux valeurs Vₐ, V_{b} et V_{c} prédéfinies de la tension Vₚ aux bornes de l'élément piézoélectrique 15, et les trois phases à charge sensiblement constante, ou encore en circuit ouvert, aux bornes de l'élément piézoélectrique 15 correspondent alors à des phases où la tension Vₚ aux bornes de l'élément piézoélectrique 15 varie d'une valeur à l'autre parmi les trois valeurs Vₐ, V_{b} et V_{c} prédéfinies, précisément de la valeur Vₐ à la valeur V_{c}, puis à la valeur V_{b}, et ainsi de suite dans l'exemple de la figure 2.

Par convention, lorsque le convertisseur 10 a pour but de fournir un courant positif sous une tension maximale Vₘₐₓ, les trois valeurs prédéfinies Vₐ, V_{b} et V_{c} sont classées par valeurs croissantes avec Vₐ < V_{b} < V_{c}, et le courant I_{L} circulant dans l'élément piézoélectrique 15 est défini comme positif quand il contribue à fournir un courant positif sous la tension Vₘₐₓ. De manière complémentaire, lorsque le convertisseur 10 a pour but de tirer un courant positif sous la tension maximale Vₘₐₓ, les valeurs prédéfinies Vₐ, V_{b} et V_{c} sont classées de manière décroissante avec alors Vₐ > V_{b} > V_{c}, et le courant I_{L} circulant dans l'élément piézoélectrique 15 est défini comme positif quand il contribue à tirer un courant positif sous la tension maximale Vₘₐₓ.

Dans l'exemple de la figure 1, le convertisseur d'énergie électrique 10 est un convertisseur continu-continu abaisseur correspondant à la première configuration C1 de l'exemple de la figure 2. Le premier interrupteur K₁ relie alors une première électrode 30 de l'élément piézoélectrique 15 à une première borne 38 de fourniture de la tension de sortie Vₒᵤₜ, et un deuxième interrupteur K₂ relie la première électrode 30 de l'élément piézoélectrique à une première borne 32 d'application de la tension d'entrée Vᵢₙ. En complément facultatif, un troisième interrupteur K₃ relie la première électrode 30 de l'élément piézoélectrique 15 à une deuxième électrode 34 dudit élément piézoélectrique. En variante, la quatrième phase à tension sensiblement constante égale à la tension V_{c} est obtenue via une diode, non représentée, et agencée en lieu et place du troisième interrupteur K₃, ladite diode reliant alors la première électrode 30 de l'élément piézoélectrique à la deuxième électrode 34 dudit élément piézoélectrique. Selon cette variante, ladite diode est plus précisément reliée à la première électrode 30 de l'élément piézoélectrique 15 par sa cathode à la deuxième électrode 34 dudit élément piézoélectrique par son anode.

Sur la figure 3, le convertisseur d'énergie électrique 10 est un convertisseur continu-continu élévateur correspondant typiquement à la deuxième configuration C2, et le premier interrupteur K₁ relie la première électrode 30 de l'élément piézoélectrique 15 à la première borne 32 d'application de la tension d'entrée Vᵢₙ du convertisseur, et le deuxième interrupteur K₂ relie la première électrode 30 de l'élément piézoélectrique 15 à la deuxième électrode 34 dudit élément piézoélectrique 15. Dans cet exemple de la figure 3, le convertisseur 10 comporte seulement deux interrupteurs commandés, à savoir les premier et deuxième interrupteurs K₁, K₂, les instants de début t₅ et de fin t₆ (ou to selon le cycle de résonance courant considéré) de la quatrième phase IV sont alors obtenus via une première diode 36 connectée par son anode à la première électrode 30 de l'élément piézoélectrique et par sa cathode à la première borne 38 de fourniture de la tension de sortie Vₒᵤₜ du convertisseur, correspondant à une borne respective de la charge 22. Plus précisément, l'instant temporel t₅ de début de la quatrième phase IV est obtenu via la fermeture de la première diode 36, c'est-à-dire via sa commutation en mode passant, et l'instant temporel t₆, t₀ de fin de la quatrième phase IV est obtenu via l'ouverture de la première diode 36, c'est-à-dire via sa commutation en mode bloqué.

Dans l'exemple de la figure 3, le convertisseur 10 comporte en outre une deuxième diode 40 connectée par son anode au premier interrupteur K₁ et par sa cathode à la première électrode 30 de l'élément piézoélectrique, et un condensateur 42 connecté en parallèle aux bornes de la charge 22, c'est-à-dire entre la première borne 38 et une deuxième borne 44 d'application de la tension de sortie Vₒᵤₜ. Dans cet exemple, la deuxième borne 44 d'application de la tension de sortie Vₒᵤₜ, une deuxième borne 46 d'application de la tension d'entrée Vᵢₙ et la deuxième électrode 34 de l'élément piézoélectrique 15 sont chacune reliées à une masse électrique 48.

En variante, non représentée de l'exemple de la figure 3, le convertisseur d'énergie électrique 10 est un convertisseur continu-continu élévateur, et la première électrode 30 de l'élément piézoélectrique est reliée à la première borne 38 de fourniture de la tension de sortie Vₒᵤₜ du convertisseur par le troisième interrupteur K₃.

Chaque interrupteur du convertisseur 10, à savoir le premier interrupteur K₁, le deuxième interrupteur K₂, et en complément facultatif le troisième interrupteur K₃, est de préférence un interrupteur unidirectionnel en courant et en tension. Chaque interrupteur K₁, K₂, K₃ comprend par exemple un transistor 50 et une diode antiparallèle 52 intrinsèque au transistor 50.

Le transistor 50 est, par exemple, un transistor à effet de champ à grille isolée, également appelé MOSFET (de l'anglais *Metal Oxide Semiconductor Field Effect Transistor).* En variante, le transistor 50 est un transistor bipolaire ; un transistor bipolaire à grille isolée, également appelé IGBT (de l'anglais *Insulated Gate Bipolar Transistor)* ; un transistor à base de silicium (Si), un transistor à base de GaN (de l'anglais *Gallium Nitride) ;* un transistor à base de carbure de silicium (SiC), ou un transistor à base de diamant, ou encore un thyristor, ou encore un switch mécanique, tel qu'un micro-switch MEMS (de l'anglais *MicroElectroMechanical System).*

Sur la figure 3 est également représenté un chronogramme d'évolution de la tension Vₚ aux bornes de l'élément piézoélectrique 15 au cours du cycle de résonance à six phases I à VI, ce chronogramme étant identique à celui représenté en figure 2 pour la deuxième configuration C2.

Lorsque le convertisseur 10 est un convertisseur continu-continu élévateur et en variante de l'exemple de la figure 3, le convertisseur 10 comporte le troisième interrupteur K₃ à la place de la première diode 36, le troisième interrupteur K₃ reliant alors la première électrode 30 de l'élément piézoélectrique 15 à la première borne 38 de fourniture de la tension de sortie Vₒᵤₜ.

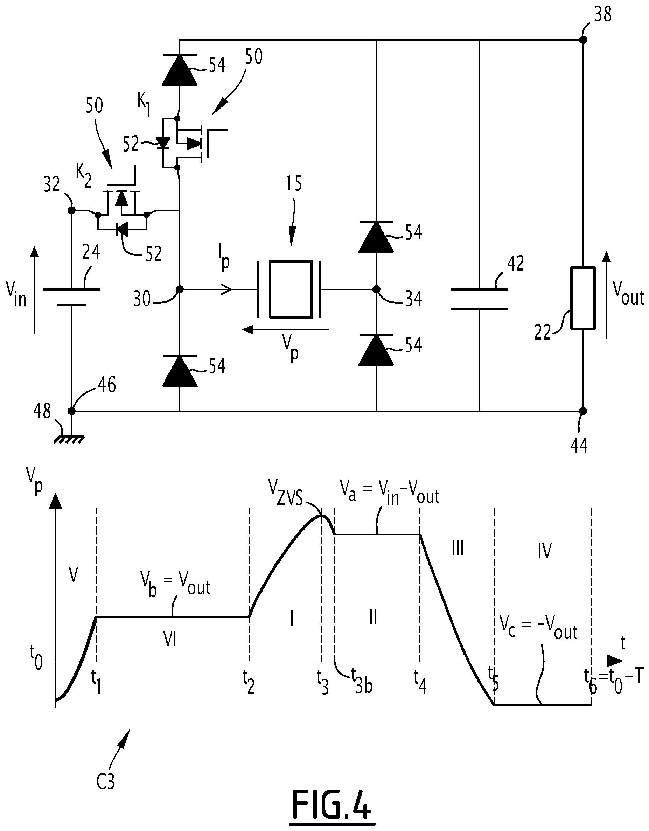

Sur la figure 4, le convertisseur d'énergie électrique 10 est un convertisseur continu-continu fortement abaisseur, correspondant à la troisième configuration C3 de la figure 2. Le premier interrupteur K₁ relie la première électrode 30 de l'élément piézoélectrique à la première borne 38 de fourniture de la tension de sortie Vₒᵤₜ, et le deuxième interrupteur K₂ relie la première électrode 30 de l'élément piézoélectrique à la première borne 32 d'application de la tension d'entrée Vᵢₙ. Dans cet exemple, le convertisseur 10 comporte seulement deux interrupteurs commandés, à savoir les premier et deuxième interrupteurs K₁, K₂, et le convertisseur 10 comporte alors en outre plusieurs diodes additionnelles 54 formant avec l'élément piézoélectrique 15 un pont, schématisé sous la forme d'un pont en H, avec les extrémités des branches du pont interconnectées. Dans cet exemple, le convertisseur 10 comporte également le condensateur 42 connecté en parallèle et aux bornes de la charge 22, c'est-à-dire entre les première et deuxième bornes 38, 44 de fourniture de la tension de sortie Vₒᵤₜ. La deuxième borne 44 de fourniture de la tension de sortie Vₒᵤₜ et la deuxième borne 46 d'application de la tension d'entrée Vᵢₙ sont par exemple reliées à la masse électrique 48.

Sur la figure 4 est également représenté un chronogramme d'évolution de la tension Vₚ aux bornes de l'élément piézoélectrique 15 au cours du cycle de résonance, ce chronogramme étant identique à celui de la figure 2 pour la troisième configuration C3.

Sur la figure 5, le convertisseur d'énergie électrique 10 est un convertisseur continu-continu selon une variante d'abaisseur, correspondant à la quatrième configuration C4. Dans cet exemple, le premier interrupteur K₁ relie la première électrode 30 de l'élément piézoélectrique 15 à la première borne 38 d'application de la tension de sortie Vₒᵤₜ, et le deuxième interrupteur K₂ relie la première électrode 30 de l'élément piézoélectrique à la première borne 32 d'application de la tension d'entrée Vᵢₙ. Dans l'exemple de la figure 5, le convertisseur 10 comporte seulement deux interrupteurs, à savoir les premier et deuxième interrupteurs K₁, K₂, et la quatrième phase correspondant à la phase à tension sensiblement constante à la valeur V_{c} est obtenue via la première diode 36 en série avec l'interrupteur K₁, reliant la deuxième électrode 34 de l'élément piézoélectrique à la première électrode 30 de l'élément piézoélectrique. La première diode 36 est connectée par son anode à la deuxième électrode 34 de l'élément piézoélectrique et par sa cathode à l'interrupteur K₁.

Dans cet exemple, le convertisseur 10 comporte en outre la deuxième diode 40 reliant la deuxième électrode 34 de l'élément piézoélectrique à la deuxième borne 44 de fourniture de la tension de sortie Vₒᵤₜ, la deuxième diode 40 étant connectée par sa cathode à la deuxième électrode 34 de l'élément piézoélectrique et par son anode à la deuxième borne 44, et le condensateur 42 entre les première et deuxième bornes 38, 44 de fourniture de la tension de sortie Vₒᵤₜ, c'est-à-dire aux bornes et en parallèle de la charge 22. La deuxième borne 44 de fourniture de la tension de sortie Vₒᵤₜ et la deuxième borne 46 d'application de la tension d'entrée Vᵢₙ sont par exemple reliées à la masse électrique 48.

Sur la figure 5 est également représenté un chronogramme d'évolution de la tension Vₚ aux bornes de l'élément piézoélectrique 15 au cours du cycle de résonance, ce chronogramme étant identique à celui de la figure 2 pour la quatrième configuration C4.

L'élément piézoélectrique 15 est connu en soi, et est typiquement modélisé, proche du mode de résonnance exploité, sous la forme d'un condensateur Cₚ et de la branche résonante 56 connectée en parallèle du condensateur Cₚ, le condensateur Cₚ et la branche résonante 56 étant connectés entre les première et deuxième électrodes 30, 34 de l'élément piézoélectrique. La branche résonante 56 est typiquement une branche RLC formée d'un condensateur, d'une résistance et d'une inductance connectés en série et non représentés. La tension Vₚ aux bornes de l'élément piézoélectrique correspond alors typiquement à la tension aux bornes du condensateur Cₚ.

Le dispositif électronique de pilotage 20 est configuré pour piloter le convertisseur d'énergie électrique 10, en particulier pour piloter la commande des interrupteurs K₁, K₂, K₃ du convertisseur, afin d'alterner des phases à tension sensiblement constante aux bornes de l'élément piézoélectrique 15 et des phases à charge sensiblement constante, c'est-à-dire en circuit sensiblement ouvert, aux bornes dudit élément piézoélectrique 15.

Le dispositif électronique de pilotage 20 comprend un module 60 de mesure de la période T du cycle de résonance de l'élément piézoélectrique 15, un module 62 de détection d'au moins un évènement caractéristique associé au convertisseur 10 et appartenant à un cycle de résonance courant ; et un module 64 de commande d'une commutation respective de chaque interrupteur K₁, K₂, K₃.

Selon l'invention, le dispositif électronique de pilotage 20 comprend en outre un module 66 de calcul d'au moins trois instants temporels ultérieurs de commutation t₂, t₃ ou t_{3b}, t₄ lors d'au moins un cycle de résonance subséquent, chaque instant temporel ultérieur de commutation étant calculé à partir d'un évènement caractéristique respectif, et le module de commande 64 est alors configuré pour commander la commutation de l'interrupteur K₁, K₂ respectif en chacun des instants temporels ultérieurs t₂, t₃, t_{3b}, t₄ calculés.

Le module de mesure 60, le module de détection 62, le module de commande 64 et le module de calcul 66 sont par exemple réalisés chacun sous forme d'un circuit électronique comportant un ou plusieurs composants électroniques, et notamment des comparateurs lorsque des comparaisons sont effectuées.

En variante, le module de mesure 60, le module de détection 62, le module de commande 64 et le module de calcul 66 sont chacun réalisés sous forme d'un composant logique programmable, tel qu'un FPGA (de l'anglais *Field Programmable Gate Array*)*,* ou sous forme d'un circuit intégré, tel qu'un ASIC (de l'anglais *Application Specific Integrated Circuit)* ou encore sous forme d'un calculateur, tel qu'un microcontrôleur, un processeur. En variante encore, le module de mesure 60, le module de détection 62, le module de commande 64 et le module de calcul 66 sont implémentés ensemble au sein d'un unique composant matériel, tel qu'un unique composant logique programmable, un unique circuit intégré, ou unique calculateur.

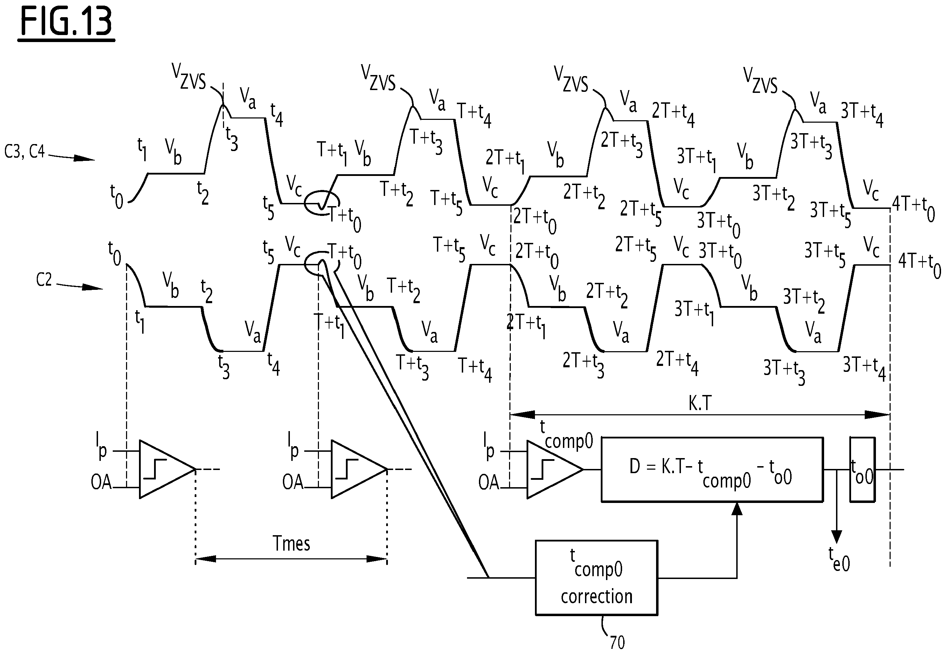

Le module de mesure 60 est configuré pour mesurer la période T du cycle de résonance de l'élément piézoélectrique 15. Le module de mesure 60 est par exemple configuré pour mesurer cette période T du cycle de résonance en détectant deux événements caractéristiques successifs de même type, la période T du cycle de résonance correspondant alors à la durée écoulée entre les deux événements caractéristiques successifs. Le type de l'événement caractéristique utilisé pour la mesure de la période T du cycle de résonance est typiquement un passage à zéro suivant une monotonie prédéfinie du courant interne I_{L} de l'élément piézoélectrique 15, comme illustré sur la figure 13 avec la mesure d'une durée Tmes entre les deux passages à zéro suivant une monotonie prédéfinie du courant interne I_{L}.

Dans l'exemple de la figure 2, le module de mesure 60 est configuré pour mesurer la période T du cycle de résonance en détectant deux passages à zéro par valeur décroissante du courant interne Iₚ de l'élément piézoélectrique 15, c'est-à-dire suivant une décroissance dudit courant interne Iₚ, la période T du cycle de résonance correspondant alors à la durée écoulée entre ces deux passages successifs à zéro par valeurs décroissantes. En variante, le module de mesure 60 est configuré pour mesurer la période T du cycle de résonance en détectant deux passages successifs à zéro par valeurs croissantes du courant interne I_{L} de l'élément piézoélectrique 15, c'est-à-dire deux passages successifs à zéro en croissance dudit courant interne I_{L}.

Le module de détection 62 est configuré pour détecter au moins un événement caractéristique associé au convertisseur d'énergie électrique 10, l'au moins un événement caractéristique appartenant au cycle de résonance courant.

Chaque évènement caractéristique est choisi parmi le groupe consistant en : un passage à zéro du courant I_{L} circulant dans l'élément piézoélectrique 15, un passage à une valeur prédéfinie V_{ref0} de la tension Vₚ aux bornes de l'élément piézoélectrique 15, un passage à une valeur prédéfinie de la tension entre une électrode 30, 34 de l'élément piézoélectrique 15 et un potentiel de référence, un passage à une valeur respective de tension sensiblement constante Vₐ, V_{b}, V_{c} de la tension Vₚ aux bornes de l'élément piézoélectrique 15 et un passage à une valeur respective de tension sensiblement constante de la tension entre l'électrode 30, 34 de l'élément piézoélectrique 15 et le potentiel de référence. Le ou les évènements caractéristiques utilisés de préférence selon l'instant temporel de commutation associé seront décrits plus en détail par la suite.

Le module de commande 64 est configuré pour commander la commutation de chacun des interrupteurs utilisés pour alterner des phases à tension sensiblement constante aux bornes de l'élément piézoélectrique 15 et des phases à charge sensiblement constante aux bornes dudit élément piézoélectrique 15, notamment pour commander le premier interrupteur K₁ et le deuxième interrupteur K₂, voir en complément facultatif le troisième interrupteur K₃.

L'homme du métier comprendra bien entendu que les bornes de l'élément piézoélectrique 15 correspondent aux première 30 et deuxième 34 électrodes de l'élément piézoélectrique 15, et sont alors également notées bornes 30, 34 de l'élément piézoélectrique. Dans la présente description, les bornes 30, 34 de l'élément piézoélectrique sont alors identiques aux électrodes 30, 34 de l'élément piézoélectrique.

Dans les exemples des figures 1 à 5, et en particulier des première, deuxième, troisième et quatrième configurations C1, C2, C3, C4, lors du cycle de résonance courant, le premier instant temporel de commutation t₂ correspond à l'ouverture du premier interrupteur K₁, le deuxième instant temporel de commutation t₃, t_{3b} correspond à la fermeture du deuxième interrupteur K₂, et le troisième instant temporel de commutation t₄ correspond à l'ouverture du deuxième interrupteur K₂.

En complément facultatif, le quatrième instant temporel de commutation t₁ (ou t₆+t₁) correspond à la fermeture du premier interrupteur K₁.

En complément facultatif encore, lorsque le convertisseur 10 comporte le troisième interrupteur K₃, le cinquième instant temporel de commutation t₅ correspond à la fermeture du troisième interrupteur K₃, et le sixième instant temporel de commutation to correspond à l'ouverture du troisième interrupteur K₃.

Le module de calcul 66 est configuré pour calculer au moins trois instants temporels ultérieurs de commutation t_{2*}, t_{3*} ou t_{3b*}, t_{4*} lors d'au moins un cycle de résonance subséquent, chaque cycle de résonance subséquent étant postérieur au cycle de résonance courant, chaque instant temporel ultérieur de commutation t_{2*}, t_{3*} ou t_{3b*}, t_{4*} étant calculé à partir d'un événement caractéristique respectif.

Parmi les instants temporels ultérieurs de commutation calculés par le module de calcul 66, un premier instant temporel ultérieur t_{2*} correspond à l'ouverture du premier interrupteur K₁ lors du cycle de résonance subséquent ; et un deuxième instant temporel ultérieur t_{3*} ou t_{3b*} correspond à la fermeture du deuxième interrupteur K₂, le deuxième instant temporel ultérieur t_{3b*} correspondant à la fermeture dudit deuxième interrupteur K₂ suite à une excursion de la tension Vₚ aux bornes de l'élément piézoélectrique 15 à la valeur de tension Vzvs permettant ensuite une commutation douce du deuxième interrupteur K₂, c'est-à-dire une commutation à zéro de tension dudit deuxième interrupteur K₂, cette excursion à la tension Vzvs étant avantageusement mise en œuvre pour les troisième et quatrième configurations C3, C4. Parmi les instants temporels ultérieurs de commutation calculés par le module de calcul 66, un troisième instant temporel ultérieur t_{4*} correspond à l'ouverture du deuxième interrupteur K₂ lors du cycle de résonance subséquent.

En complément, un quatrième instant temporel ultérieur t₁* correspond à la fermeture du premier interrupteur K₁ lors du cycle de résonance subséquent.

En complément facultatif encore, notamment lorsque le convertisseur 10 comporte trois interrupteurs, et alors en outre le troisième interrupteur K₃, un cinquième instant temporel ultérieur t_{5*} correspond à la fermeture du troisième interrupteur K₃ lors du cycle de résonance subséquent. Selon ce complément facultatif, un sixième instant temporel ultérieur t_{0*} correspond à l'ouverture du troisième interrupteur K₃ lors du cycle de résonance subséquent.

Le module de calcul 66 est de préférence configuré pour calculer chaque instant temporel ultérieur t_{2*}, t_{3*} ou t_{3b*}, t_{4*}, t_{1*}, t_{5*}, t_{0*} en fonction d'un écart temporel égal à K fois la période T du cycle de résonance de l'élément piézoélectrique 15, K étant un nombre entier de valeur supérieure ou égale à 1.

Chaque instant temporel ultérieur de commutation t_{2*}, t_{3*}, t_{3b*}, t_{4*}, t_{1*}, t_{5*}, t_{0*} est de préférence égal à la somme de l'instant temporel de commutation t₂, t₃ ou t_{3b}, t₄, t₁, t₅, t₀ correspondant lors du cycle de résonance courant et dudit écart temporel égal à K.T. En particulier, le premier instant temporel ultérieur t_{2*} est égal à la somme du premier instant temporel t₂ et de l'écart temporel K.T ; le deuxième instant temporel ultérieur t_{3*}, t_{3b*} est égal à la somme du deuxième instant temporel de commutation t₃, t_{3b} et de l'écart temporel K.T ; et le troisième instant temporel ultérieur t_{4*} est égal à la somme du quatrième instant temporel de commutation t₄ et de l'écart temporel K.T.

En complément facultatif, le quatrième instant temporel ultérieur t₁* est égal à la somme du quatrième instant temporel de commutation t₁ et de l'écart temporel K.T. En complément facultatif encore, le cinquième instant temporel ultérieur t_{5*} est égal à la somme du cinquième instant temporel de commutation t₅ et de l'écart temporel K.T ; et le sixième instant temporel ultérieur t_{0*} est égal à la somme du sixième instant temporel de commutation t₀ et de l'écart temporel K.T.

En complément facultatif, la valeur du nombre K pris en compte pour définir l'écart temporel est déterminée en fonction de la durée de la période T du cycle de résonance. Selon ce complément facultatif, plus la durée de ladite période T du cycle de résonance est courte, plus la valeur du nombre K est élevée. La valeur du nombre K est de préférence supérieure à 2.

En complément facultatif encore, le module de calcule 66 est configuré pour calculer les instants temporels ultérieurs de commutation t_{2*}, t_{3*}, t_{3b*}, t_{4*}, t₁, t_{5*}, t_{0*} lors de plusieurs cycles de résonance subséquents successifs, les au moins trois instants temporels ultérieurs t_{2*}, t_{3*}, t_{3b}, t_{4*} étant alors calculés pour chacun desdits cycles subséquents successifs. Pour les premier, deuxième et troisième instants temporels ultérieurs t_{2*}, t_{3*}, t_{3b*}, t_{4*}, l'événement caractéristique à partir duquel est calculé l'instant temporel ultérieur de commutation respectif est de préférence le passage à zéro du courant I_{L} circulant dans l'élément piézoélectrique 15, et par exemple le passage à zéro et par valeurs décroissantes dudit courant I_{L} dans l'élément piézoélectrique 15. Le module de calcul 66 est alors configuré pour calculer chacun des premier, deuxième et troisième instant temporel ultérieur t_{2*}, t_{3*}, t_{3b*}, t_{4*} comme étant égal - à partir de l'événement caractéristique, c'est-à-dire à partir du passage à zéro du courant I_{L} - à la somme de l'écart temporel K.T et d'une durée de référence respective. Chaque durée de référence respective est de préférence déterminée à partir de l'instant temporel de commutation correspondant t₂, t₃, t_{3b}, t₄, c'est-à-dire à partir respectivement du premier t₂, du deuxième t₃, t_{3b} et du troisième t₄ instant temporel de commutation, lors du cycle de résonance courant ou bien à partir d'un instant temporel associé au début de la période T du cycle de résonance, tel que le sixième instant temporel de commutation t₀.

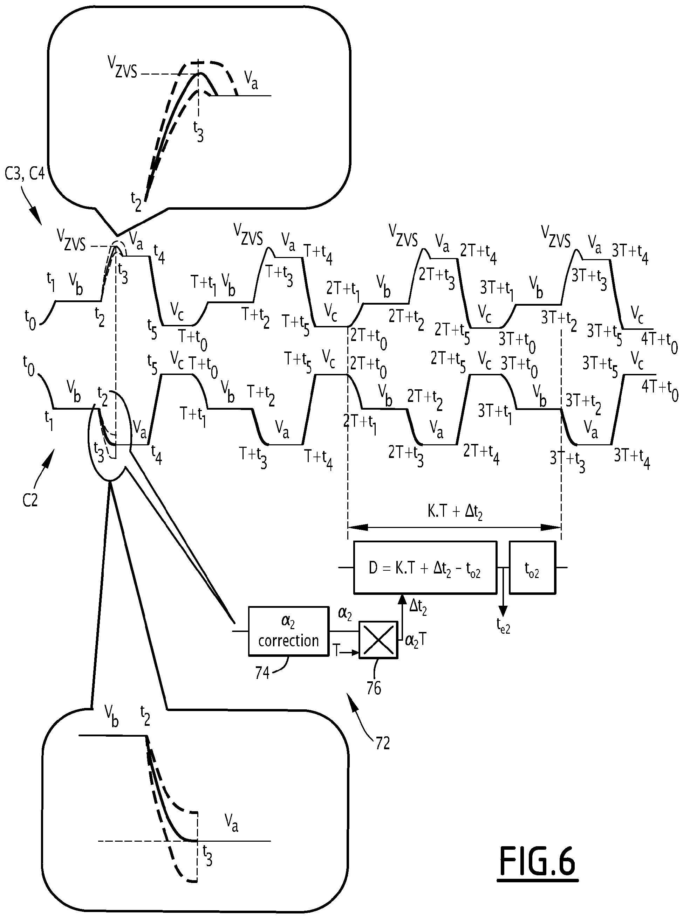

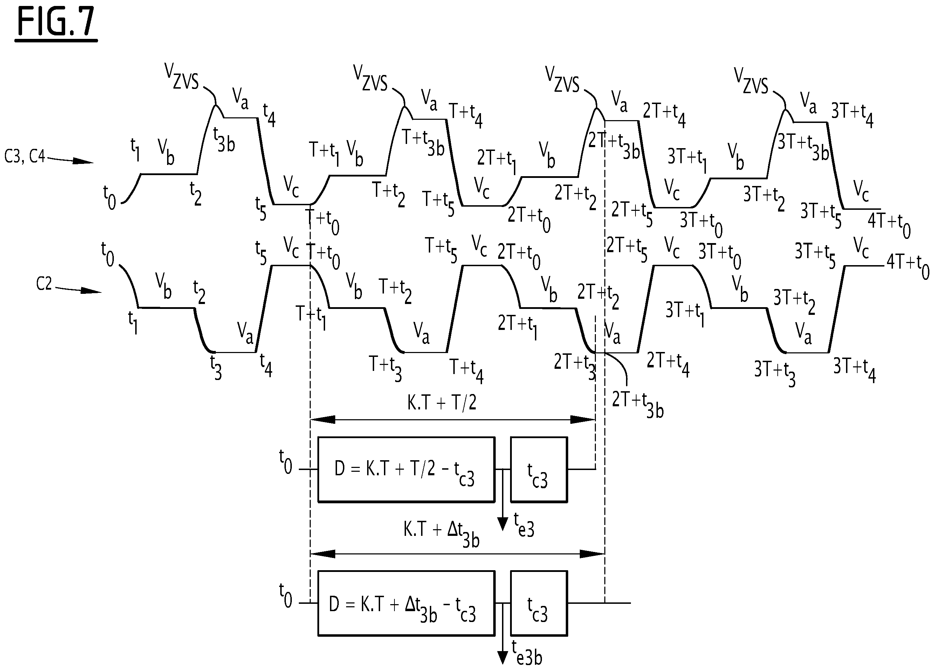

Selon ce complément, pour le premier instant temporel ultérieur t_{2*}, la durée de référence respective Δt₂ est égale à la durée écoulée entre l'évènement caractéristique associé et le premier instant temporel de commutation t₂ lors du cycle de résonance courant, c'est-à-dire à la durée entre l'instant t₀ et le premier instant temporel de commutation t₂, i.e. à la différence (t₂ - t₀) dans l'exemple des figures 2 et 6. Pour le deuxième instant temporel ultérieur t_{3*}, la durée de référence respective est par exemple égale à la moitié de la période T du cycle de résonance, c'est-à-dire à la demi-période T/2 du cycle de résonance. En variante, la durée de référence respective pour le deuxième instant temporel ultérieur t_{3*} est égale à la durée écoulée entre l'évènement caractéristique, tel que le passage à zéro du courant I_{L}, et le deuxième instant temporel de commutation t₃ lors du cycle de résonance courant, cette durée de référence Δt₃ étant alors égale à la durée entre l'instant t₀ et le deuxième instant temporel de commutation t₃, c'est-à-dire à la différence (t₃ - t₀) dans l'exemple des figures 2 et 7. Pour le deuxième instant temporel ultérieur t_{3b*} suite à l'excursion préalable à la valeur de tension Vzvs, la durée de référence respective Δt_{3b} est typiquement égale à la durée écoulée entre l'événement caractéristique et le deuxième instant temporel de commutation t_{3b} lors du cycle de résonance courant, cette durée de référence respective étant alors égale à la durée entre l'instant t₀ et le deuxième instant temporel de commutation t_{3b}, c'est-à-dire à la différence (t_{3b} - t₀) dans l'exemple des figures 2 et 7. Pour le troisième instant temporel ultérieur t_{4*}, la durée de référence respective Δt₄ est égale à la durée écoulée entre l'événement caractéristique et le troisième instant temporel de commutation t₄ lors du cycle de résonance courant, cette durée de référence respective Δt₄ étant alors égale à la durée entre l'instant t₀ et le troisième instant temporel de commutation t₄, c'est-à-dire à la différence (t₄ - t₀) dans l'exemple des figures 2 et 8.

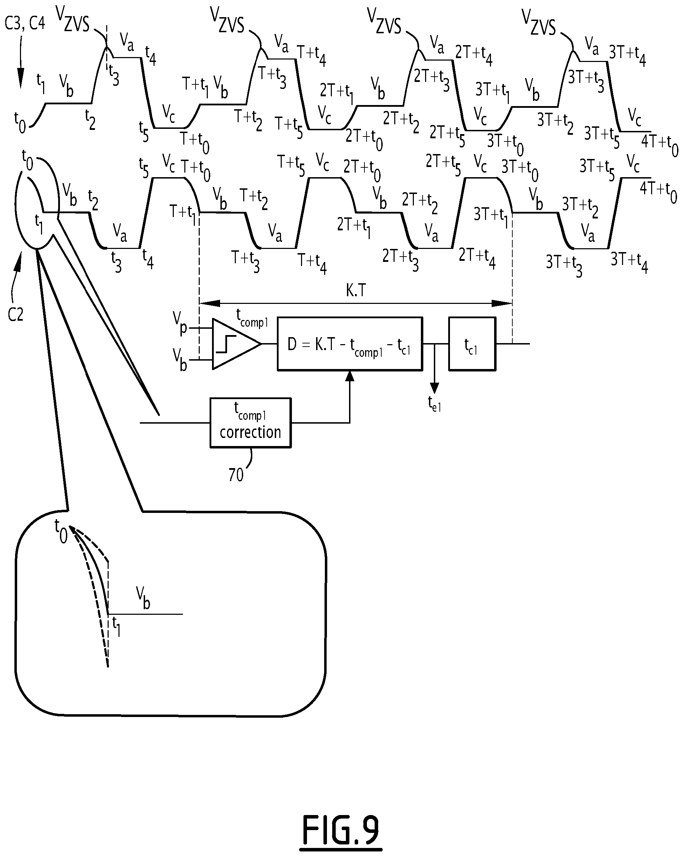

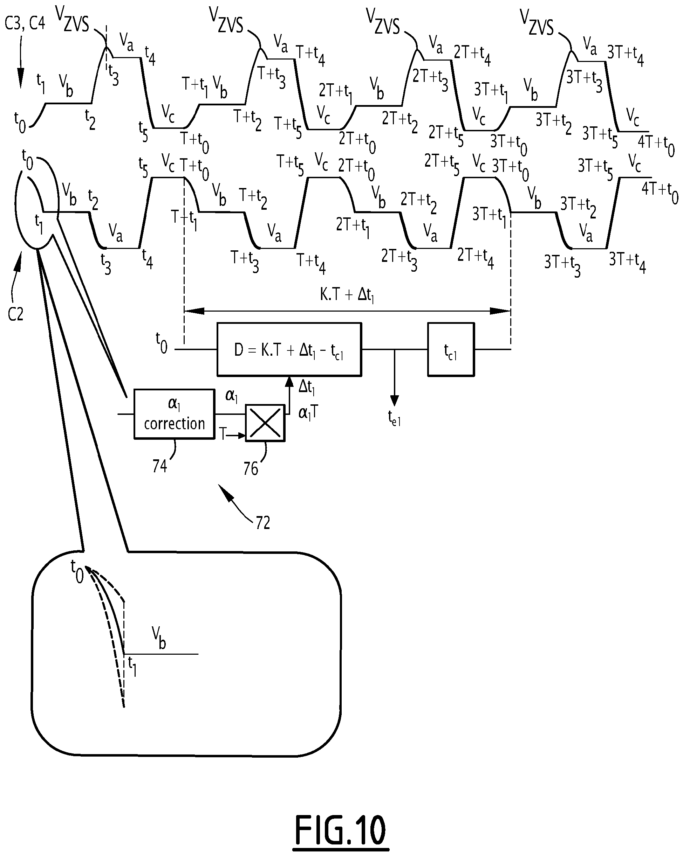

En complément facultatif, l'évènement caractéristique associé au quatrième instant temporel ultérieur t_{1*} est le passage de la tension Vₚ aux bornes de l'élément piézoélectrique 15 à une valeur respective de tension sensiblement constante, telle que la valeur V_{b} dans l'exemple de la figure 9. En variante, l'événement caractéristique associé au quatrième instant temporel ultérieur t_{1*} est le passage à zéro du courant I_{L} circulant dans l'élément piézoélectrique 15, et par exemple le passage à zéro par valeurs décroissantes dudit courant I_{L}, comme dans l'exemple de la figure 10.

Selon ce complément facultatif, lorsque l'événement caractéristique associé au quatrième instant temporel ultérieur t_{1*} est le passage de la tension Vₚ a une valeur respective de tension sensiblement constante, le module de calcul 66 est configuré pour calculer le quatrième instant temporel ultérieur t_{1*} en fonction du seul écart temporel K.T, le quatrième instant temporel ultérieur t_{1*} étant égal à l'écart temporel K.T à partir dudit évènement caractéristique, c'est-à-dire à l'écart temporel K.T ajouté à l'instant temporel de détection dudit évènement caractéristique.

Selon ce complément facultatif, lorsque l'événement caractéristique associé au quatrième instant temporel ultérieur t_{1*} est le passage à zéro du courant I_{L}, le module de calcul 66 est configuré pour calculer le quatrième instant temporel ultérieur t_{1*} comme étant égal à la somme de l'écart temporel K.T et d'une durée de référence respective Δt₁. Cette durée de référence respective Δt₁ correspond alors à la durée écoulée entre l'événement caractéristique et le quatrième instant temporel de commutation t₁ lors du cycle de résonance courant, cette durée de référence respective Δt₁ étant alors égale à la durée entre l'instant t₀ et le quatrième instant temporel de commutation t₁, c'est-à-dire à la différence (t₁ - t₀) dans l'exemple de la figure 10.

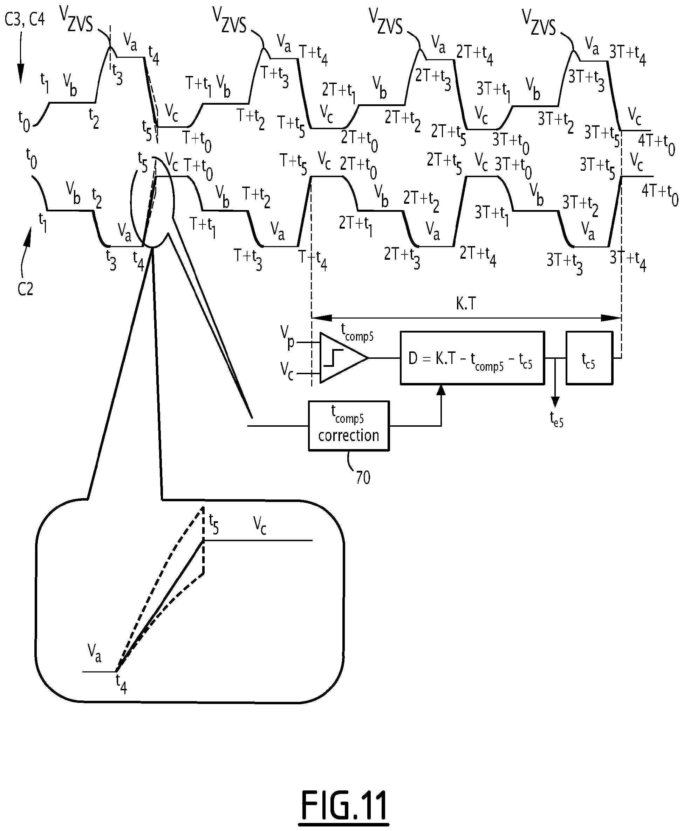

En complément facultatif encore, lorsque le convertisseur 10 comporte trois interrupteurs, et alors en outre le troisième interrupteur K₃, l'événement caractéristique associé au cinquième instant temporel ultérieur t_{5*} est le passage de la tension Vₚ aux bornes de l'élément piézoélectrique 15 a une valeur respective de tension sensiblement constante, telle que la valeur V_{c} dans l'exemple de la figure 11. En variante, l'événement caractéristique associé au cinquième instant temporel ultérieur t_{5*} est le passage à zéro du courant I_{L} circulant dans l'élément piézoélectrique 15, et par exemple le passage à zéro par valeurs décroissantes dudit courant I_{L}.

Selon ce complément facultatif, lorsque l'événement caractéristique associé au cinquième instant temporel ultérieur t_{5*} est le passage de la tension Vₚ à la valeur respective de tension sensiblement constante, le module de calcul 66 est configuré pour calculer le cinquième instant temporel ultérieur t_{5*} à partir du seul écart temporel K.T, le cinquième instant temporel ultérieur t_{5*} étant égal à l'écart temporel K.T à partir dudit événement caractéristique, c'est-à-dire à l'écart temporel K.T ajouté à l'instant temporel de détection dudit évènement caractéristique.

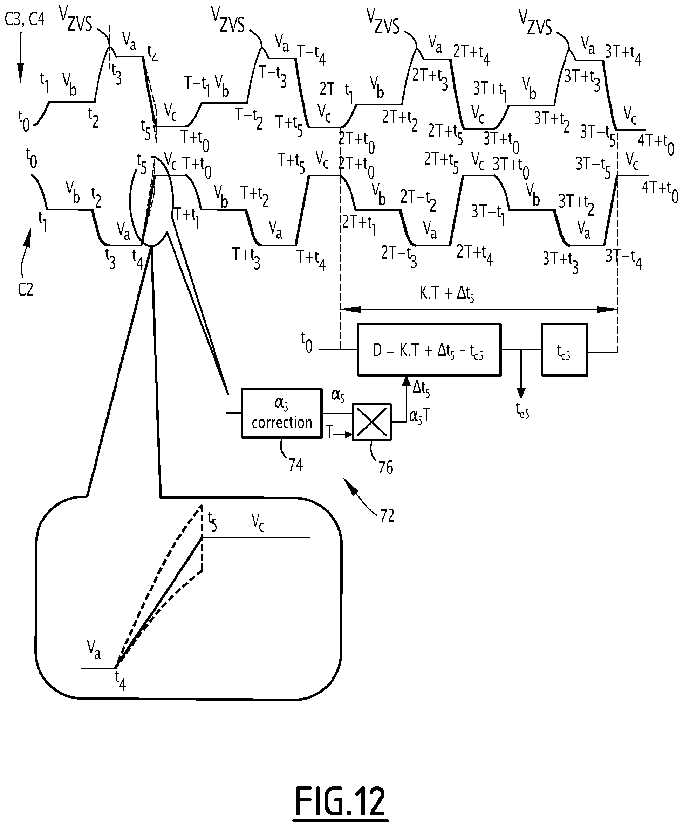

Selon ce complément facultatif, lorsque l'évènement caractéristique associé au cinquième instant temporel ultérieur t_{5*} est le passage à zéro du courant I_{L}, le module de calcul 66 est configuré pour calculer le cinquième instant temporel ultérieur t_{5*} comme étant égal, à partir de l'événement caractéristique, à la somme de l'écart temporel K.T et d'une durée de référence respective Δt₅. Cette durée de référence respective Δt₅ est alors typiquement égale à la durée écoulée entre l'évènement caractéristique et le cinquième instant temporel de commutation t₅ lors du cycle de résonance courant, cette durée de référence respective Δt₅ étant égale à la durée entre l'instant t₀ et le cinquième instant temporel de commutation t₅, c'est-à-dire à la différence (t₅ - t₀) dans l'exemple de la figure 12.

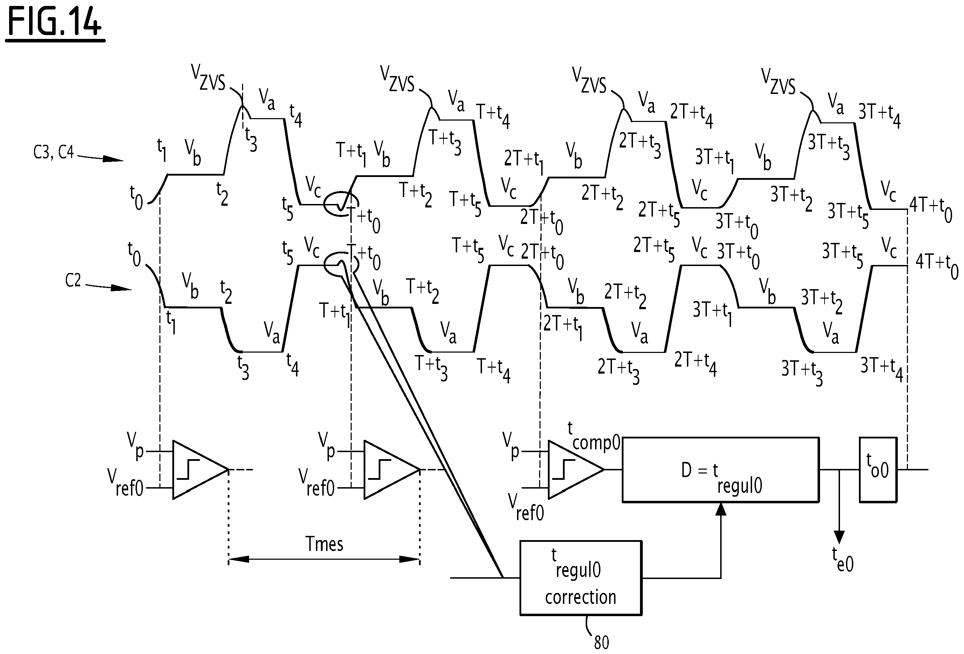

En complément facultatif encore, l'événement caractéristique associé au sixième instant temporel ultérieur t_{0*} est le passage à zéro du courant I_{L} circulant dans l'élément piézoélectrique 15, et par exemple le passage à zéro par valeurs décroissantes dudit courant I_{L}, comme dans l'exemple de la figure 13. En variante, l'événement caractéristique associé au sixième instant temporel ultérieur t_{0*} est le passage de la tension Vₚ aux bornes de l'élément piézoélectrique à une valeur prédéfinie, telle que la valeur V_{ref0} dans l'exemple de la figure 14.

Selon ce complément facultatif encore, le module de calcul 66 est alors configuré pour calculer le sixième instant temporel ultérieur t_{0*} à partir du seul écart temporel K.T, le sixième instant temporel ultérieur t_{0*} étant égal à l'écart temporel K.T à partir dudit événement caractéristique, c'est-à-dire à l'écart temporel K.T ajouté à l'instant temporel de détection dudit évènement caractéristique.

Le module de détection 62 est par exemple configuré pour détecter l'événement caractéristique associé à l'instant temporel ultérieur respectif par comparaison, avec une valeur prédéfinie correspondante et via un comparateur respectif, d'une grandeur choisie parmi la déformation de l'élément piézoélectrique 15 (typiquement via une électrode séparée disposée contre l'élément piézoélectrique 15), le courant I_{L} circulant dans l'élément piézoélectrique 15, la tension Vₚ aux bornes de l'élément piézoélectrique 15, et la tension entre une borne 30, 34 de l'élément piézoélectrique 15 et un potentiel de référence, tel que le potentiel de la masse électrique 48 du convertisseur d'énergie électrique.

En complément facultatif, le module de calcul 66 est alors configuré pour calculer un instant temporel ultérieur respectif en fonction en outre d'une durée de comparaison associée au comparateur utilisé pour détecter l'événement caractéristique dudit instant temporel ultérieur respectif. La durée de comparaison, telle que la durée t_{comp1} dans l'exemple de la figure 9, la durée t_{comp5} dans l'exemple de la figure 11, ou encore la durée t_{comp0} dans l'exemple de la figure 13, est une durée nécessaire au comparateur pour effectuer ladite comparaison et générer un signal de détection de l'événement caractéristique correspondant.

Selon ce complément facultatif, le module de calcul 66 est alors typiquement configuré pour retrancher ladite durée de comparaison t_{comp1}, t_{comp5}, t_{comp0} à l'écart temporel K.T.

Selon ce complément facultatif encore, chaque durée de comparaison t_{comp1}, t_{comp5}, t_{comp0} est par exemple une mesure prédéfinie.

En complément facultatif encore, chaque durée de comparaison t_{comp1}, t_{comp5}, t_{comp0} est en outre modifiable via une première boucle de régulation 70 en fonction d'un écart entre la grandeur observée, telle que la tension Vₚ aux bornes de l'élément piézoélectrique 15, et la valeur prédéfinie correspondante lors d'une détection d'évènement(s) au cours d'un cycle de résonance précédent. Dans l'exemple de la figure 9, la première boucle de régulation 70 sur la durée de comparaison t_{comp1} est représentée par le bloc intitulé « t_{comp1} correction », la régulation étant effectuée dans l'exemple de la figure 9 en fonction de l'écart au cours d'un cycle de résonance précédent entre la tension Vₚ aux bornes de l'élément piézoélectrique et la valeur prédéfinie V_{b} lors de la détection d'évènement(s) au cours de ce cycle de résonance précédent. Dans l'exemple de la figure 11, la première boucle de régulation 70 pour modifier la durée de comparaison t_{comp5} est représentée par le bloc appelé « t_{comp5} correction », la régulation étant effectuée dans cet exemple en fonction de l'écart au cours d'un cycle de résonance précédent entre la tension Vₚ aux bornes de l'élément piézoélectrique et la valeur prédéfinie V_{c} lors de la détection d'évènement(s) au cours de ce cycle de résonance précédent. Dans l'exemple de la figure 13, la première boucle de régulation 70 pour modifier la durée de comparaison t_{com0} est représentée via le bloc appelé « t_{comp0} correction », et dans cet exemple la régulation est effectuée en fonction de l'écart au cours d'un cycle de résonance précédent entre la tension Vₚ aux bornes de l'élément piézoélectrique 15 et la valeur prédéfinie V_{c} lors de la détection d'évènement(s) au cours de ce cycle de résonance précédent. Dans cet exemple de la figure 13, la première boucle de régulation 70 est en outre apte à vérifier si la sortie de la zone à tension sensiblement constante V_{c} s'est bien effectuée sur un zéro de courant.

En complément facultatif encore, lorsque la première boucle de régulation 70 pour modifier la durée de comparaison est mise en œuvre en fonction d'un écart entre la tension Vₚ aux bornes de l'élément piézoélectrique 15 et une valeur prédéfinie respective, telle que la valeur V_{c} dans l'exemple de la figure 11, la première boucle de régulation 70 est de préférence configurée pour effectuer cette régulation via une mesure d'enveloppe du signal de la tension Vₚ, avec de préférence encore une mise en œuvre bornée par deux butées, à savoir une butée minimale et une butée maximale sur la valeur de la durée de comparaison t_{comp5}, afin d'améliorer encore la robustesse de fonctionnement de ladite première boucle de régulation 70. Sur la figure 11, les traits en pointillés entre les instants de commutation t₄ et t₅ représentent des évolutions typiques de la tension Vₚ si l'ouverture en le troisième instant de commutation t₄ arrive trop tôt ou trop tard, et donnent ainsi une idée de ce qu'il faut observer : sur/sous tension par rapport à la valeur prédéfinie V_{c}, dérivée positive ou négative à l'application de la valeur prédéfinie V_{c}. Dans le cas où le troisième instant de commutation t₄ arrive trop tôt, alors la tension Vₚ est supérieure à la valeur prédéfinie V_{c} en l'instant suivant de commutation t₅ ; et inversement si le troisième instant de commutation t₄ arrive trop tard, alors la tension Vₚ est inférieure à la valeur prédéfinie V_{c} en l'instant suivant de commutation t₅. Ceci est détectable via la mesure d'enveloppe de la tension Vₚ ou d'une valeur crête de la tension Vₚ. L'homme du métier observera alors que la mesure d'enveloppe est plus facile à mettre en œuvre, qu'une mesure instantanée de la tension Vₚ en l'instant t₅.

Le module de commande 64 est alors configuré pour commander la commutation de chaque interrupteur K₁, K₂, K₃ respectifs en chacun des instants temporels ultérieurs t_{2*}, t_{3*}, t_{3b*}, t_{4*}, t_{1*}, t_{5*}, t_{0*} calculé.

Le module de commande 64 est, pour la commande de commutation d'un interrupteur K₁, K₂, K₃ respectif, typiquement configuré pour envoyer un signal de commande audit interrupteur en un instant temporel d'émission tₑ₁, tₑ₂, tₑ₃, t_{e3b}, tₑ₄, tₑ₁, tₑ₅, tₑ₀ respectif, chaque instant temporel d'émission étant égal à l'instant temporel ultérieur de commutation respectif moins une durée de commutation tₒ₂, tₑ₃, t_{e3b}, tₒ₄, t_{c1}, t_{c5}, tₒ₀ propre audit interrupteur, la durée de commutation étant une durée nécessaire à l'interrupteur pour effectuer ladite commutation à partir du moment où il a reçu le signal de commande correspondant de la part du module de commande 64. Cette durée de commutation inclut typiquement un délai de propagation de la commande jusqu'au transistor, par exemple incluant des délais associés au passage d'une barrière d'isolation galvanique et/ou d'un driver de transistor permettant de piloter le transistor avec un niveau adéquat de courant/tension. Dans les exemples des figures 6 à 14, chaque instant temporel d'émission tₑ₁, tₑ₂, tₑ₃, t_{e3b}, tₑ₄, tₑ₁, tₑ₅, tₑ₀ est alors égal à une durée D respective à partir de l'événement caractéristique correspondant, c'est-à-dire à la durée D respective ajoutée à l'instant temporel de détection dudit événement caractéristique. La durée D respective varie d'un exemple à l'autre, et est précisée sur chacune des figures 6 à 14.

Selon ce complément facultatif, une durée de commutation en ouverture tₒ et une durée de commutation en fermeture t_{c} sont de préférence définies pour chaque interrupteur K₁, K₂, K₃.

Selon ce complément facultatif, dans l'exemple de la figure 6, le module de commande 44 est alors configuré pour envoyer le signal de commande au premier interrupteur K₁ en un premier instant temporel d'émission tₑ₂ égal au premier instant temporel ultérieur de commutation t_{2*} moins la durée de commutation tₒ₂ en ouverture propre au premier interrupteur K₁. De manière analogue, dans l'exemple de la figure 7, le module de commande 44 est configuré pour envoyer le signal de commande de fermeture au deuxième interrupteur K₂ en un deuxième instant temporel d'émission tₑ₃, t_{e3b} égal au deuxième instant temporel ultérieur de commutation t_{3*}, t_{3b*} moins la durée de commutation en fermeture tₑ₃ propre au deuxième interrupteur K₂. Dans l'exemple de la figure 8, le module de commande 44 est configuré pour envoyer le signal de commande d'ouverture au deuxième interrupteur K₂ en un troisième instant temporel d'émission tₑ₄ égal au troisième instant temporel ultérieur t_{4*} moins la durée de commutation en ouverture tₒ₄ propre au deuxième interrupteur K₂. Dans l'exemple des figures 9 et 10, le module de commande 44 est configuré pour envoyer le signal de commande de fermeture au premier interrupteur K₁ en un quatrième instant temporel d'émission tₑ₁ égal au quatrième instant temporel ultérieur t₁* moins la durée de commutation en fermeture tₑ₁ propre au premier interrupteur K₁. Dans l'exemple des figures 11 et 12, le module de commande 44 est configuré pour envoyer le signal de commande de fermeture au troisième interrupteur K₃ en un cinquième instant temporel d'émission tₑ₅ égal au cinquième instant temporel ultérieur t_{5*} moins la durée de commutation en fermeture t_{c5} propre au troisième interrupteur K₃. De manière analogue encore, dans l'exemple des figures 13 et 14, le module de commande 44 est configuré pour envoyer le signal de commande d'ouverture au troisième interrupteur K₃ en un sixième instant temporel tₑ₀ égal au sixième instant temporel ultérieur t_{0*} moins la durée de commutation en ouverture tₒ₀ propre au troisième interrupteur K₃.

En complément facultatif, chaque durée de référence respective Δt₂, Δt₄, Δt₁, Δt₅ est en outre modifiable via une deuxième boucle de régulation 72 en fonction d'un écart entre la grandeur observée, telle que la tension Vₚ aux bornes de l'élément piézoélectrique 15, et la valeur prédéfinie correspondante lors d'une détection d'évènement(s) au cours d'un cycle de résonance précédent. Chaque deuxième boucle de régulation 72 comporte par exemple un bloc 74 de calcul d'un coefficient correctif suivi d'un bloc multiplicateur 76. Le bloc de calcul 74 est alors configuré pour calculer un coefficient correctif α₂, α₄, α₁, α₂, α₅ respectif, et à délivrer ce coefficient correctif α₂, α₄, α₁, α₂, α₅ en entrée du bloc multiplicateur 76. Le bloc multiplicateur 76 est ensuite apte à multiplier ce coefficient correctif α₂, α₄, α₁, α₂, α₅ avec la valeur de la période T du cycle de résonance, afin de délivrer en sortie une durée égale au produit du coefficient correctif α₂, α₄, α₁, α₂, α₅ et de la période T du cycle de résonance, pour modifier la durée de référence respective.

En complément facultatif encore, la deuxième boucle de régulation 72 est configurée en outre pour mettre en œuvre une mesure d'enveloppe de la grandeur observée, représentée sous forme de traits pointillés dans les exemples des figures 6, 10 et 12, et permettant d'offrir une robustesse de régulation encore meilleure.

Dans l'exemple de la figure 12, la mesure d'enveloppe est analogue à celle décrite précédemment en regard de la figure 11.

Dans l'exemple de la figure 6, les traits en pointillés entre les instants de commutation t₂ et t₃ représentent des évolutions typiques de la tension Vₚ si l'ouverture en le premier instant de commutation t₂ arrive trop tôt ou trop tard, et donnent ainsi une idée de ce qu'il faut observer : sur/sous tension par rapport à la valeur prédéfinie Vₐ, dérivée positive ou négative à l'application de la valeur prédéfinie Vₐ. Dans le cas où le premier instant de commutation t₂ arrive trop tôt, alors la tension Vₚ est inférieure à la valeur prédéfinie Vₐ en l'instant suivant de commutation t₃ ; et inversement si le premier instant de commutation t₂ arrive trop tard, alors la tension Vₚ est supérieure à la valeur prédéfinie Vₐ en l'instant suivant de commutation t₃. Ceci est détectable via la mesure d'enveloppe de la tension Vₚ ou d'une valeur crête de la tension Vₚ, qui est plus facile à mettre en œuvre qu'une mesure instantanée de la tension Vₚ en l'instant t₃.

De manière analogue, dans les exemples des figures 9 et 10, les traits en pointillés entre les instants de commutation t₀ et t₁ représentent des évolutions typiques de la tension Vₚ si l'ouverture en l'instant de commutation t₀ arrive trop tôt ou trop tard, et donnent ainsi une idée de ce qu'il faut observer : sur/sous tension par rapport à la valeur prédéfinie V_{b}, dérivée positive ou négative à l'application de la valeur prédéfinie V_{b}. Dans le cas où l'instant de commutation t₀ arrive trop tôt, alors la tension Vₚ est inférieure à la valeur prédéfinie V_{b} en l'instant suivant de commutation t₁; et inversement si l'instant de commutation t₀ arrive trop tard, alors la tension Vₚ est supérieure à la valeur prédéfinie V_{b} en l'instant suivant de commutation t₁. Ceci est détectable via la mesure d'enveloppe de la tension Vₚ ou d'une valeur crête de la tension Vₚ, qui est plus facile à mettre en œuvre qu'une mesure instantanée de la tension Vₚ en l'instant t₁.

Dans l'exemple de la figure 6, la deuxième boucle de régulation 72 est mise en œuvre en fonction d'un écart entre la tension Vₚ aux bornes de l'élément piézoélectrique 15 et la valeur prédéfinie correspondante, à savoir la valeur Vₐ pour la deuxième configuration C₂, et la valeur V_{zvs} pour les troisième et quatrième configurations C₃, C₄, lors d'une détection d'évènement(s) au cours d'un cycle de résonance précédent. Dans l'exemple de la figure 6, le bloc de calcul 74 est alors apte à calculer un coefficient correctif α₂, et le bloc multiplicateur 76 est ensuite apte à multiplier le coefficient correctif α₂ avec la période T du cycle de résonance pour délivrer en sortie la première durée modifiée α₂.T, permettant de mettre à jour la première durée de référence Δt₂.

Dans l'exemple de la figure 8, la deuxième boucle de régulation 72 est mise en œuvre en fonction d'un écart entre une grandeur de consigne Gₛₑₜ, telle qu'une puissance de sortie de consigne, un courant de sortie de consigne, ou encore une tension de sortie de consigne, et une grandeur mesurée Gₘₑₛ correspondante, le bloc de calcul 74 étant alors apte à calculer un coefficient correctif α₄ en fonction de la grandeur de consigne Gₛₑₜ et de la grandeur mesurée Gₘₑₛ correspondante, puis le bloc multiplicateur 76 est apte à multiplier ledit coefficient correctif α₄ avec la période T du cycle de résonance pour délivrer en sortie une durée modifiée α₄.T, afin de mettre à jour la troisième durée de référence respective Δt₄.

L'homme du métier observera d'ailleurs que le troisième instant temporel de commutation t₄, ainsi que les instants temporels ultérieurs t_{4*}, permettent de modifier le bilan énergétique du convertisseur 10 sur une période donnée en supposant les valeurs Vₐ, V_{b} et V_{c} fixes. Si le bilan énergétique est positif, alors l'amplitude du courant I_{L} circulant dans l'élément piézoélectrique 15 augmente, et inversement si le bilan énergétique est négatif, alors l'amplitude du courant I_{L} diminue. Plus le courant I_{L} dans l'élément piézoélectrique 15 est élevé, alors plus le courant échangé augmente durant les phases à tension constante (c'est-à-dire les phases à la tension Vₐ, V_{b} ou encore V_{c}). Plus les phases en circuit ouvert (c'est-à-dire les phases à charge sensiblement constante) sont courtes, et plus la puissance convertie augmente. La deuxième boucle de régulation 72 permet alors de réguler la tension de sortie, le courant de sortie, ou encore la puissance de sortie du convertisseur 10 sur une valeur de consigne respective.

Dans l'exemple de la figure 10, la deuxième boucle de régulation 72 est mise en œuvre en fonction d'un écart entre la tension Vₚ aux bornes de l'élément piézoélectrique 15 et la valeur prédéfinie V_{b} correspondante lors d'une détection d'évènement(s) au cours d'un cycle de résonance précédent. Le bloc de calcul 74 est alors apte à calculer le coefficient correctif α₁, puis le bloc multiplicateur 76 est apte à multiplier ce coefficient correctif α₁ avec la période T du cycle de résonance pour délivrer en sortie une durée modifiée α₁.T, afin de mettre à jour la quatrième durée de référence Δt₁.

Dans l'exemple de la figure 12, la deuxième boucle de régulation 72 est mise en œuvre en fonction d'un écart entre la tension Vₚ aux bornes de l'élément piézoélectrique 15 et la valeur prédéfinie V_{c} correspondante, lors d'une détection d'évènement(s) au cours d'un cycle de résonance précédent. Le bloc de calcul 74 est alors apte à calculer un coefficient correctif α₅ en fonction de cet écart, puis le bloc multiplicateur 76 est apte à multiplier ce coefficient correctif α₅ avec la période T du cycle de résonance, pour délivrer en sortie une durée modifiée α₅.T, afin de mettre à jour la cinquième durée de référence Δt₅.

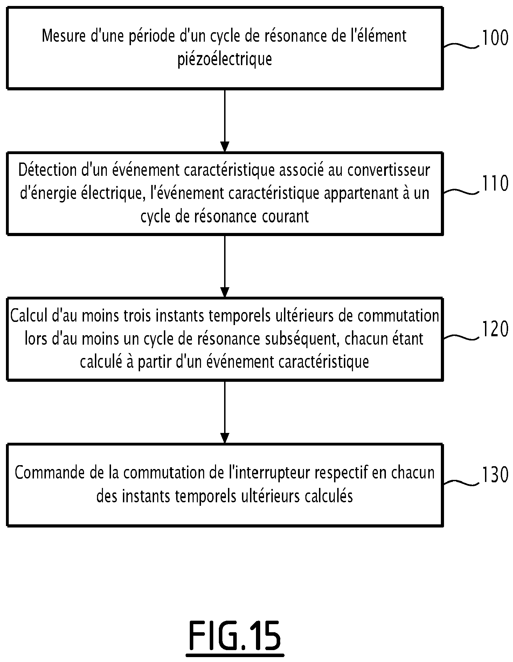

Le fonctionnement du convertisseur d'énergie électrique 10, et en particulier du dispositif électronique de pilotage 20, selon l'invention va être à présent décrit en regard de la figure 15 représentant un organigramme d'un procédé, selon l'invention, de pilotage du convertisseur d'énergie électrique 10, le procédé étant mis en œuvre par le dispositif électronique de pilotage 20.

Lors d'une étape initiale 100, le dispositif de pilotage 20 mesure, via son module de mesure 60, la période T du cycle de résonance de l'élément piézoélectrique 15.

Lors de cette étape de mesure 100, le module de mesure 60 mesure par exemple cette période T du cycle de résonance en détectant deux événements caractéristiques successifs de même type, la période T du cycle de résonance correspondant alors à la durée écoulée entre ces deux évènements caractéristiques successifs de même type. Le type d'événement caractéristique pour la mesure de la période T du cycle de résonance est typiquement un passage à zéro suivant une monotonie prédéfinie du courant I_{L} circulant dans l'élément piézoélectrique 15.

Le dispositif de pilotage 20 passe ensuite à l'étape suivante 110 lors de laquelle il détecte, via son module de détection 62, un évènement caractéristique associé au convertisseur d'énergie électrique 10, l'événement caractéristique appartenant à un cycle de résonance courant.

Lors de cette étape de détection 110, l'événement caractéristique détecté est typiquement choisi parmi le groupe consistant en : un passage à zéro du courant I_{L} circulant dans l'élément piézoélectrique 15 ; un passage de la tension Vₚ aux bornes de l'élément piézoélectrique 15 à une valeur prédéfinie, telle que la valeur V_{ref0} ; un passage à une valeur prédéfinie de la tension entre une borne 30, 34 de l'élément piézoélectrique 15 et un potentiel de référence, tel que le potentiel de la masse électrique 48 ; un passage de la tension Vₚ aux bornes de l'élément piézoélectrique 15 à une valeur respective de tension sensiblement constante, telle que la valeur Vₐ, V_{b}, V_{c}, ; un passage de la tension entre la borne 30, 34 de l'élément piézoélectrique et le potentiel de référence, tel que la masse électrique 48, à une valeur respective de tension sensiblement constante ; et un passage à une valeur de déformation de référence l'élément piézoélectrique 15, telle qu'une valeur de déformation mesurée via une électrode séparée disposée contre l'élément piézoélectrique 15 et une mesure de la tension /des charges sur ladite électrode.

A l'issue de cette étape de détection 110, le dispositif de pilotage 20 calcule, via son module de calcul 66 et lors de l'étape suivante 120, au moins trois instants temporels ultérieurs de commutation lors d'au moins un cycle de résonance subséquent, à savoir le premier instant temporel ultérieur t_{2*} correspondant à l'ouverture du premier interrupteur K₁, le deuxième instant temporel ultérieur t_{3*}, t_{3b*} correspondant à la fermeture du deuxième interrupteur K₂ et le troisième instant temporel ultérieur t_{4*} correspondant à l'ouverture du deuxième interrupteur K₂, chaque instant temporel ultérieur de commutation étant calculé à partir d'un événement caractéristique respectif.

Lors de cette étape de calcul 120, le module de calcul 66 calcule optionnellement en outre le quatrième instant temporel ultérieur t_{1*} correspondant à la fermeture du premier interrupteur K₁.

En complément facultatif, lorsque le convertisseur d'énergie électrique 10 comporte trois interrupteurs, et alors en outre le troisième interrupteur K₃, le module de calcul 66 calcule optionnellement en outre le cinquième instant temporel ultérieur t_{5*} correspondant à la fermeture du troisième interrupteur K₃, et également le sixième instant temporel ultérieur t_{0*} correspondant à l'ouverture du troisième interrupteur K₃.

Lors de cette étape de calcul 120, le module de calcul 70 calcule de préférence les instants temporels ultérieurs t_{2*}, t_{3*}, t_{3b*}, t_{4*}, t₁, t_{5*}, t_{0*} lors de plusieurs cycles de résonance subséquents successifs, les instants temporels ultérieurs t_{2*}, t_{3*}, t_{3b*}, t_{4*}, t_{1*}, t_{5*}, t_{0*} étant alors calculés pour chacun desdits cycles subséquents successifs.

Lors de cette étape de calcul 120, chaque instant temporel ultérieur calculé t_{2*}, t_{3*}, t_{3b*}, t_{4*}, t_{1*}, t_{5*}, t_{0*} dépend typiquement de l'écart temporel K.T égal à K fois la période T du cycle de résonance de l'élément piézoélectrique, K étant un nombre entier de valeur supérieure ou égale à 1, et de préférence de valeur supérieure à 2. La valeur du nombre K est déterminée en fonction de la durée de la période T du cycle de résonance, et plus la durée de ladite période T du cycle de résonance est courte, plus la valeur du nombre K est élevée.

Dans l'exemple de la figure 6, le premier instant temporel ultérieur de commutation t_{2*} correspond à l'instant 3T+t₂, et l'événement détecté est le passage à zéro du courant I_{L} circulant dans l'élément piézoélectrique 15 en l'instant 2T+t₀. Dans cet exemple, la valeur de K est alors égale à 1. Par ailleurs, la deuxième boucle de régulation 72 est mise en œuvre par rapport au deuxième instant temporel de commutation t₃, c'est-à-dire afin de réguler une erreur de mesure autour du deuxième instant temporel de commutation t₃.

Dans l'exemple de la figure 7, le deuxième instant temporel ultérieur de commutation t_{3*} correspond à l'instant 2T+t₃, et l'événement détecté associé est le passage à zéro du courant I_{L} en l'instant temporel T+t₀, ceci pour la deuxième configuration C2. Pour les troisième et quatrième configurations C3, C4, le deuxième instant temporel ultérieur de commutation t_{3b*} correspond à l'instant 2T+t_{3b}, et l'événement caractéristique associé est également le passage à zéro du courant I_{L} en l'instant temporel T+t₀. Dans cet exemple, la valeur de K est égale à 1.

Dans l'exemple de la figure 8, le troisième instant temporel ultérieur de commutation t_{4*} correspond à l'instant 2T+t₄, et l'événement caractéristique associé est le passage à zéro du courant I_{L} en l'instant T+t₀. Dans cet exemple, la valeur de K est égale à 1.

Dans l'exemple de la figure 9, le quatrième instant temporel ultérieur de commutation t_{1*} correspond à l'instant 3T+t₁, et l'évènement caractéristique associé est le passage à la valeur V_{b} de la tension Vₚ aux bornes de l'élément piézoélectrique 15 en l'instant T+t₁. Dans cet exemple, la valeur de K est égale à 2. Dans cet exemple de la figure 9, la première boucle de régulation 70 est également mise en œuvre par rapport au quatrième instant temporel de commutation t₁.

Dans l'exemple de la figure 10, le quatrième instant temporel ultérieur de commutation t_{1*} correspond à l'instant 3T+t₁, et l'évènement caractéristique associé est le passage à zéro du courant I_{L} en l'instant T+t₀. Dans cet exemple, la valeur de K est égale à 2. Dans l'exemple de la figure 10, la deuxième boucle de régulation 74 est mise en œuvre par rapport au quatrième instant temporel de commutation t₁, c'est-à-dire afin de réguler une erreur de mesure autour du quatrième instant temporel de commutation t₁.

Dans l'exemple des figures 11 et 12, le cinquième instant temporel ultérieur de commutation t_{5*} est l'instant 3T+ t₅, et l'évènement caractéristique associé est le passage à la valeur V_{c} de la tension Vₚ en l'instant T+ t₅ dans l'exemple de la figure 11, 1a valeur de K étant égale à 2 ; l'évènement caractéristique associé étant le passage à zéro du courant I_{L} en l'instant 2T+t₀ dans l'exemple de la figure 12, la valeur de K étant alors égale à 1. Dans l'exemple de la figure 11, la première boucle de régulation 70 est mise en œuvre en l'instant temporel t₅, et dans l'exemple de la figure 12, la deuxième boucle de régulation 72 est mise en œuvre en l'instant temporel t₅.

Dans l'exemple des figures 13 et 14, le sixième instant temporel ultérieur de commutation t_{0*} est l'instant 4T+t₀, et l'évènement caractéristique associé est le passage à zéro du courant I_{L} en l'instant temporel 2T+t₀ dans l'exemple de la figure 13, la valeur de K étant égale à 2 ; l'événement caractéristique associé étant le passage à la valeur de référence V_{ref0} de la tension Vₚ aux bornes de l'élément piézoélectrique 15 dans l'exemple de la figure 14. Dans l'exemple de la figure 13, la première boucle de régulation 70 est mise en œuvre par rapport à l'instant temporel T+to, afin de réguler la durée de comparaison t_{comp0} associée au comparateur détectant le passage à zéro du courant I_{L}.

Dans les exemples des figures 6 à 13, la valeur de K est égale à 1 ou 2, ceci notamment par souci de simplification des dessins, et l'homme du métier comprendra bien entendu que la valeur de K est également susceptible de prendre des valeurs supérieures ou égales à 3, ceci afin de calculer encore davantage en anticipation les instants temporels ultérieurs de commutation t_{2*}, t_{3*}, t_{3b*}, t_{4*}, t_{1*}, t_{5*}, t_{a*}.

Dans l'exemple de la figure 14, une troisième boucle de régulation 80 agit directement sur le délai t_{regul0} correspondant au délai entre, d'une part, le résultat de la comparaison de la tension Vₚ avec la tension de référence V_{ref0}, et d'autre part, la commande d'ouverture du troisième interrupteur K₃. La troisième boucle de régulation 80 est par exemple apte à réguler la valeur du dépassement en tension qui fait suite à l'ouverture du troisième interrupteur K₃ à la sortie de la phase à tension sensiblement constante à la valeur V_{c}. La troisième boucle de régulation 80 est alors apte à réguler la durée t_{regul0} de sorte à obtenir la valeur de dépassement souhaitée sur la tension Vₚ, cette valeur de dépassement ne devant être ni trop élevée pour limiter les pertes, ni trop faible pour être mesurable sans trop de bruit, cette valeur de dépassement étant par exemple comprise entre 100 mV et la tension Vₘₐₓ divisée par 10.

Dans l'exemple de la figure 14, la tension de référence V_{ref0} est par exemple comprise entre la valeur V_{c} et la valeur V_{b} par laquelle la tension Vₚ est censée passer en sortie de la phase à tension sensiblement constante à la valeur V_{c} qui est mise en œuvre juste avant. La probabilité de détection du passage par la tension de référence V_{ref0} de la tension Vₚ est ainsi augmentée.

En complément, la durée t_{regul0} est bornée entre une valeur minimale et une valeur maximale ce qui permet une poursuite de la commande du convertisseur 10, notamment durant le démarrage où des détections peuvent être manquées. L'écart entre les valeurs maximale et minimale associées à la durée t_{regul0} est de préférence limité à la période T du cycle de résonance afin d'avoir une solution unique de détection, et l'écart entre les valeurs maximale et minimale où un coefficient de régulation a_{regul0} destiné à être multiplié avec la période T du cycle de résonance pour mettre à jour la valeur de la durée t_{regul0} est également inférieur à 1.

A l'issue de l'étape de calcul 120, le dispositif de pilotage 20 commande alors, lors de l'étape suivante 130 et via son module de commande 64, la commutation des premier et deuxième interrupteurs K₁, K₂ respectifs en chacun des premier, deuxième et troisième instants temporels ultérieurs t_{2*}, t_{3*}, t_{3b*}, t_{4*} calculés, voire en outre la fermeture du premier interrupteur K₁ en le quatrième instant temporel ultérieur t_{1*} calculé.

En complément facultatif, lorsque le convertisseur d'énergie électrique 10 comporte trois interrupteurs, et alors en outre le troisième interrupteur K₃, le module de commande 64 commande alors la commutation du troisième interrupteur K₃ en chacun des cinquième et sixième instants temporels ultérieurs t_{5*}, t_{0*} calculés.

Lors de l'étape de commande 130, les signaux de commande des interrupteurs K₁, K₂, K₃ respectifs sont de préférence envoyés, par le module de commande 64, en des instants temporels d'émission tₑ₂, tₑ₃, t_{e3b}, tₑ₄, tₑ₁, tₑ₅, tₑ₀ respectifs précédant l'instant temporel ultérieur calculé t_{2*}, t_{3*}, t_{3b*}, t_{4*}, t_{1*}, t_{5*}, t_{0*} respectif de la durée de commutation propre audit interrupteur respectif, ceci afin que la commutation effective de l'interrupteur respectif soit mieux synchronisée avec l'instant temporel ultérieur t_{2*}, t_{3*}, t_{3b*}, t_{4*}, t_{1*}, t_{5*}, t_{0*} respectif calculé, la durée de commutation de l'interrupteur respectif étant la durée nécessaire à l'interrupteur pour effectuer ladite commutation à partir du moment où il a reçu le signal de commande correspondant de la part du module de commande 64, cette durée de commutation incluant typiquement des délais de propagation de la commande au travers d'un bus de communication et/ou d'une interface d'isolation galvanique et/ou d'un driver de transistor et/ou de portes logiques et/ou de dispositifs de protection.

En complément, chacune des durées calculées/corrigées T, ΔTᵢ, αᵢT, t_{compi}, t_{reguli}, avec i compris entre 0 et 6, sont aptes à être bornées de sorte à assurer un pilotage, même non optimal, des interrupteurs K₁, K₂, K₃ respectifs, dans le cas où certaines détections/mesures présentent des erreurs. De telles erreurs peuvent par exemple être présentes lors du démarrage du convertisseur 10, lorsque les tensions et/ou courants ne sont pas encore bien établis.

Un certain nombre d'exemples de réalisation et de topologies du convertisseur 10 ont été présentés en regard des figures 1 à 5, et ce pour différentes configurations de conversions, à savoir abaisseur de tension, élévateur de tension, fortement abaisseur de tension et variante d'abaisseur de tension. L'homme du métier comprendra néanmoins que l'invention ne se limite pas à ces topologies, et que l'invention concerne notamment aussi les topologies décrites dans les documents FR 3 064 850 B1, FR 3 086 471 A1 et FR 3 086 472 A1, notamment celles décrites en regard de la figure 19 ou de la figure 20 du document FR 3 086 472 A1. Ces différentes topologies permettent alors de choisir les valeurs prédéfinies Vₐ, V_{b} et V_{c} parmi les tensions : 0 ; Vᵢₙ ; -Vᵢₙ ; Vₒᵤₜ ; -Vₒᵤₜ ; Vᵢₙ-Vₒᵤₜ ; Vₒᵤₜ-Vᵢₙ ; Vᵢₙ+Vₒᵤₜ ; et -Vᵢₙ-Vₒᵤₜ.

En outre, l'homme du métier comprendra également que l'invention ne se limite pas aux trois paliers de tension aux valeurs prédéfinies Vₐ, V_{b} et V_{c}, et que l'invention concerne notamment aussi un fonctionnement du convertisseur 10 avec un palier de tension supplémentaire, tel que décrit par exemple en regard des figures 17 et 18 du document FR 3 086 472 A1.

Ainsi, avec le dispositif électronique de pilotage 20 selon l'invention, les instants temporels ultérieurs de commutation t_{2*}, t_{3*}, t_{3b*}, t_{4*}, t_{1*}, voire en complément facultatif t_{5*}, t_{0*}, des interrupteurs K₁, K₂, voire K₃, sont alors calculés en anticipation pour un ou plusieurs cycles de résonance subséquent(s), postérieur(s) au cycle de résonance courant comportant le ou les évènements caractéristiques associés à partir duquel ces instants temporels ultérieurs de commutations (t_{2*}, t_{3*}, t_{3b*}, t_{4*}, t_{1*}, t_{5*}, t_{0*}) sont calculés.

Le dispositif de pilotage 20 selon l'invention permet alors d'avoir un fonctionnement adapté du convertisseur 10 avec des commutations des interrupteurs K₁, K₂, K₃ aux instants temporels appropriés, et ceci même pour une fréquence élevée de fonctionnement du convertisseur 10, telle qu'une fréquence supérieure à 1 MHz. La fréquence de fonctionnement du convertisseur 10 est égale à l'inverse de la période T du cycle de résonance.

On conçoit ainsi que le dispositif électronique de pilotage 20 et le procédé de pilotage selon l'invention permettent d'offrir un pilotage amélioré du convertisseur d'énergie électrique 10, notamment à fréquence de fonctionnement élevée dudit convertisseur, typiquement au-delà de 1 MHz.

## Revendications

1. Dispositif électronique (20) de pilotage d'un convertisseur d'énergie électrique (10), le convertisseur comportant un élément piézoélectrique (15) et plusieurs interrupteurs (K₁, K₂, K₃) aptes à être commandés pour alterner des phases (II, IV, VI) à tension sensiblement constante aux bornes (30, 34) de l'élément piézoélectrique (15) et des phases (I, III, V) à charge sensiblement constante aux bornes (30, 34) dudit élément piézoélectrique (15),
le dispositif électronique de pilotage (20) comprenant :
- un module de mesure (60) configuré pour mesurer une période (T) d'un cycle de résonance de l'élément piézoélectrique (15) ;
- un module de détection (62) configuré pour détecter au moins un évènement caractéristique associé au convertisseur d'énergie électrique (10), l'au moins un évènement caractéristique appartenant à un cycle de résonance courant ;
- un module de commande (64) configuré pour commander une commutation de chacun des interrupteurs (K₁, K₂, K₃) ;
**caractérisé en ce qu'**il comprend en outre :
- un module de calcul (66) configuré pour calculer au moins trois instants temporels ultérieurs de commutation (t_{2*}, t_{3*}, t_{3b*}, t_{4*}, t_{1*}, t_{5*}, t_{0*}) lors d'au moins un cycle de résonance subséquent, chaque cycle de résonance subséquent étant postérieur au cycle de résonance courant, chaque instant temporel ultérieur de commutation (t_{2*}, t_{3*}, t_{3b*}, t_{4*}, t_{1*}, t_{5*}, t_{0*}) étant calculé à partir d'un événement caractéristique respectif, un premier instant temporel ultérieur (t_{2*}) correspondant à l'ouverture d'un premier interrupteur (K₁), un deuxième instant temporel ultérieur (t_{3*}, t_{3b*}) correspondant à la fermeture d'un deuxième interrupteur (K₂) et un troisième instant temporel ultérieur (t_{4*}) correspondant à l'ouverture du deuxième interrupteur (K₂), et
le module de commande (64) étant configuré pour commander la commutation de l'interrupteur (K₁, K₂, K₃) respectif en chacun des instant temporels ultérieurs (t_{2*}, t_{3*}, t_{3b*}, t_{4*}, t_{1*}, t_{5*}, t_{0*}) calculés.

2. Dispositif (20) selon la revendication 1, dans lequel le nombre total de phases à tension sensiblement constante (II, IV, VI) aux bornes (30, 34) de l'élément piézoélectrique (15) et à charge sensiblement constante (I, III, V) aux bornes (30, 34) dudit élément piézoélectrique (15) au cours d'un cycle de résonance respectif est supérieur ou égal à 6.

3. Dispositif (20) selon la revendication 1 ou 2, dans lequel chaque évènement caractéristique est choisi parmi le groupe consistant en : un passage à zéro du courant (I_{L}) circulant dans l'élément piézoélectrique (15), un passage à une valeur prédéfinie (V_{ref0}) de la tension (Vₚ) aux bornes (30, 34) de l'élément piézoélectrique (15), un passage à une valeur prédéfinie de la tension entre une borne de l'élément piézoélectrique (15) et un potentiel de référence, un passage à une valeur respective de tension sensiblement constante (Vₐ, V_{b}, V_{c}) de la tension (Vₚ) aux bornes (30, 34) de l'élément piézoélectrique (15), un passage à une valeur respective de tension sensiblement constante de la tension entre la borne de l'élément piézoélectrique (15) et le potentiel de référence, et un passage à une valeur de déformation de référence, telle qu'une valeur de déformation mesurée via une électrode séparée disposée contre l'élément piézoélectrique (15).

4. Dispositif (20) selon la revendication 3, dans lequel l'événement caractéristique associé aux premier, deuxième et troisième instants temporels ultérieurs (t_{2*}, t_{3*}, t_{3b*}, t_{4*}) est le passage à zéro du courant (I_{L}) circulant dans l'élément piézoélectrique (15) ;
l'événement caractéristique étant de préférence le passage à zéro et en décroissant dudit courant (I_{L}).

5. Dispositif (20) selon l'une quelconque des revendications précédentes, dans lequel chaque instant temporel ultérieur (t_{2*}, t_{3*}, t_{3b*}, t_{4*}, t_{1*}, t_{5*}, t_{0*}) calculé dépend d'un écart temporel égal à K fois la période (T) du cycle de résonance de l'élément piézoélectrique (15), K étant un nombre entier de valeur supérieure ou égale à 1.

6. Dispositif (20) selon la revendication 5, dans lequel la valeur du nombre K est déterminée en fonction de la durée de la période (T) du cycle de résonance, et plus la durée de ladite période (T) est courte, plus la valeur du nombre K est élevée ;
la valeur du nombre K étant de préférence supérieure à 2.

7. Dispositif (20) selon la revendication 5 ou 6, dans lequel chacun des premier, deuxième et troisième instants temporels ultérieurs (t_{2*}, t_{3*}, t_{3b*}, t_{4*}) est égal, à partir l'événement caractéristique, à la somme de l'écart temporel (KT) et d'une durée de référence (Δt₂, Δt₃, Δt_{3b}, Δt₄) respective ;
chaque durée de référence (Δt₂, Δt₃, Δt_{3b}, Δt₄) respective étant de préférence déterminée à partir de l'instant temporel de commutation (t₂, t₃, t_{3b}, t₄) correspondant lors du cycle de résonance courant ou à partir de la période (T) du cycle de résonance.

8. Dispositif (20) selon l'une quelconque des revendications précédentes, dans lequel le module de commande (64) est, pour la commande de commutation d'un interrupteur (K₁, K₂, K₃) respectif, configuré pour envoyer un signal de commande audit interrupteur (K₁, K₂, K₃) en un instant temporel d'émission (tₑ₂, tₑ₃, t_{e3b}, tₑ₄, tₑ₁, tₑ₅, tₑ₀) respectif, chaque instant temporel d'émission (tₑ₂, tₑ₃, t_{e3b}, tₑ₄, tₑ₁, tₑ₅, tₑ₀) étant égal à l'instant temporel ultérieur de commutation (t_{2*}, t_{3*}, t_{3b*}, t_{4*}, t₁, t_{5*}, t_{0*}) respectif moins une durée de commutation (tₒ₂, tₑ₃, tₒ₄, t_{c1}, t_{c5}, tₒ₀) propre audit interrupteur (K₁, K₂, K₃), la durée de commutation (tₒ₂, tₑ₃, tₒ₄, t_{c1}, t_{c5}, tₒ₀) étant une durée nécessaire à l'interrupteur (K₁, K₂, K₃) pour effectuer ladite commutation à partir du moment où il a reçu le signal de commande correspondant,
la durée de commutation (tₒ₂, tₑ₃, tₒ₄, t_{c1}, t_{c5}, tₒ₀) incluant de préférence un délai de propagation du signal de commande correspondant au travers d'un bus de communication et/ou d'une interface d'isolation galvanique et/ou d'un driver de transistor et/ou de portes logiques et/ou de dispositifs de protection ;
une durée de commutation en ouverture (tₒ) et une durée de commutation en fermeture (t_{c}) étant de préférence prédéfinies pour chaque interrupteur (K₁, K₂, K₃).

9. Dispositif (20) selon l'une quelconque des revendications précédentes, dans lequel le module de calcul (66) est configuré pour calculer les instants temporels ultérieurs (t_{2*}, t_{3*}, t_{3b*}, t_{4*}, t_{1*}, t_{5*}, t_{0*}) lors de plusieurs cycles de résonance subséquents successifs, les au moins trois instants temporels ultérieurs (t_{2*}, t_{3*}, t_{3b*}, t_{4*}, t_{1*}, t_{5*}, t_{0*}) étant calculés pour chacun desdits cycles subséquents successifs.

10. Dispositif (20) selon l'une quelconque des revendications précédentes, dans lequel le module de calcul (66) est configuré pour calculer en outre un quatrième instant temporel ultérieur (t_{1*}) correspondant à la fermeture du premier interrupteur (K₁).

11. Dispositif (20) selon la revendication 10, dans lequel l'évènement caractéristique associé au quatrième instant temporel ultérieur (t_{1*}) est le passage à une valeur respective de tension sensiblement constante (V_{b}) de la tension (Vₚ) aux bornes (30, 34) de l'élément piézoélectrique (15) ou bien le passage à zéro du courant (I_{L}) circulant dans l'élément piézoélectrique (15).

12. Dispositif (20) selon l'une quelconque des revendications précédentes, dans lequel le convertisseur (10) comporte trois interrupteurs (K₁, K₂, K₃) aptes à être commandés pour alterner des phases (II, IV, VI) à tension sensiblement constante aux bornes (30, 34) de l'élément piézoélectrique (15) et des phases (I, III, V) à charge sensiblement constante aux bornes (30, 34) dudit élément piézoélectrique (15), et
dans lequel le module de calcul (66) est configuré pour calculer en outre un cinquième instant temporel ultérieur (t_{5*}) correspondant à la fermeture d'un troisième interrupteur (K₃).

13. Dispositif (20) selon la revendication 12, dans lequel l'événement caractéristique associé au cinquième instant temporel ultérieur (t_{5*}) est le passage à une valeur respective de tension sensiblement constante (V_{c}) de la tension (Vₚ) aux bornes (30, 34) de l'élément piézoélectrique (15) ou bien le passage à zéro du courant (I_{L}) circulant dans l'élément piézoélectrique (15).

14. Dispositif (20) selon la revendication 12 ou 13, dans lequel le module de calcul (66) est configuré pour calculer en outre un sixième instant temporel ultérieur (t_{0*}) correspondant à l'ouverture du troisième interrupteur (K₃).

15. Dispositif (20) selon la revendication 14, dans lequel l'événement caractéristique associé au sixième instant temporel ultérieur (t_{0*}) est le passage à zéro du courant (I_{L}) circulant dans l'élément piézoélectrique (15) ou bien le passage à une valeur prédéfinie (V_{ref0}) de la tension (Vₚ) aux bornes (30, 34) de l'élément piézoélectrique (15).

16. Dispositif (20) selon l'une quelconque des revendications précédentes, dans lequel le module de mesure (60) est configuré pour mesurer la période (T) du cycle de résonance en détectant deux évènements caractéristiques successifs de même type, la période (T) du cycle de résonance correspond à la durée écoulée entre les deux évènements caractéristiques successifs ;
ledit type de l'événement caractéristique étant de préférence un passage à zéro suivant une monotonie prédéfinie d'un courant (I_{L}) circulant dans l'élément piézoélectrique (15).

17. Système électronique de conversion d'énergie électrique (5) comprenant :
- un convertisseur d'énergie électrique (10) comportant un élément piézoélectrique (15) et plusieurs interrupteurs (K₁, K₂, K₃) aptes à être commandés pour alterner des phases (II, IV, VI) à tension sensiblement constante aux bornes (30, 34) de l'élément piézoélectrique (15) et des phases (I, III, V) à charge sensiblement constante aux bornes (30, 34) dudit élément piézoélectrique (15) ; et
- un dispositif électronique (20) de pilotage du convertisseur d'énergie électrique (10) ;
**caractérisé en ce que** le dispositif de pilotage (20) est selon l'une quelconque des revendications précédentes.

18. Système (5) selon la revendication 17, dans lequel le système électronique de conversion d'énergie électrique (5) est un système de conversion en une énergie électrique continue, tel qu'un système de conversion continu-continu ou un système de conversion alternatif-continu.

19. Procédé de pilotage d'un convertisseur d'énergie électrique (10), le convertisseur (10) comportant un élément piézoélectrique (15) et plusieurs interrupteurs (K₁, K₂, K₃) aptes à être commandés pour alterner des phases (II, IV, VI) à tension sensiblement constante aux bornes (30, 34) de l'élément piézoélectrique (15) et des phases (I, III, V) à charge sensiblement constante aux bornes (30, 34) dudit élément piézoélectrique (15),
le procédé étant mis en œuvre par un dispositif électronique de pilotage (20) et comprenant les étapes suivantes :
- mesure (100) d'une période (T) d'un cycle de résonance de l'élément piézoélectrique (15) ;
- détection (110) d'un événement caractéristique associé au convertisseur d'énergie électrique (10), l'événement caractéristique appartenant à un cycle de résonance courant ; et
- commande (130) d'une commutation de chacun des interrupteurs (K₁, K₂, K₃) ;
**caractérisé en ce qu'**il comprend en outre l'étape suivante :
- calcul (120) d'au moins trois instants temporels ultérieurs de commutation (t_{2*}, t_{3*}, t_{3b*}, t_{4*}, t_{1*}, t_{5*}, t_{0*}) lors d'au moins un cycle de résonance subséquent, chaque cycle de résonance subséquent étant postérieur au cycle de résonance courant, chaque instant temporel ultérieur de commutation (t_{2*}, t_{3*}, t_{3b*}, t_{4*}, t_{1*}, t_{5*}, t_{0*}) étant calculé à partir d'un évènement caractéristique respectif, un premier instant temporel ultérieur (t_{2*}) correspondant à l'ouverture d'un premier interrupteur (K₁), un deuxième instant temporel ultérieur (t_{3*}, t_{3b*}) correspondant à la fermeture d'un deuxième interrupteur (K₂) et un troisième instant temporel ultérieur (t_{4*}) correspondant à l'ouverture du deuxième interrupteur (K₂),
l'étape de commande (130) comportant une commande de la commutation de l'interrupteur (K₁, K₂, K₃) respectif en chacun des instant temporels ultérieurs (t_{2*}, t_{3*}, t_{3b*}, t_{4*}, t_{1*}, t_{5*}, t_{0*}) calculés.
